# EUROPEAN PATENT SPECIFICATION

(11) **EP 4 042 327 B1**
(45) Date of publication and mention of the grant of the patent: **07.10.2026**
(21) Application number: 19787191.6
(22) Date of filing: 09.10.2019
(51) Int. Cl.: G06F 18/21, G06F 18/2413, G06N 3/042, G06N 3/045, G06N 3/088, G06N 3/0455, G06V 10/82, G06N 3/0499, G06N 3/082, G06N 3/0895, G06N 3/09, G06N 3/092, G06N 3/0985

(54) **EVENT DETECTION IN A DATA STREAM**
EREIGNISERKENNUNG IN EINEM DATENSTROM
DÉTECTION D'ÉVÉNEMENT DANS UN FLUX DE DONNÉES

(43) Date of publication of application: 17.08.2022
(73) Proprietor: Telefonaktiebolaget LM Ericsson (publ), 164 83 Stockholm (SE)
(72) Inventor: XIAO, Richard Bin, 417 01 Göteborg (SE); HERNANDEZ HERRANZ, Aitor, 112 14 Stockholm (SE); TUDOR, Valentin, 187 67 Täby (SE)
(74) Representative: Ericsson
(86) International application number: PCT/EP2019/077413
(87) International publication number: WO 2021/069073

(56) References cited:
- AKSHAT AGARWAL ET AL: "Learning Transferable Cooperative Behavior in Multi-Agent Teams", ARXIV.ORG, CORNELL UNIVERSITY LIBRARY, 201 OLIN LIBRARY CORNELL UNIVERSITY ITHACA, NY 14853, 4 June 2019 (2019-06-04), XP081372647
- CRUZ DAVID LUVIANO ET AL: "Path planning of multi-agent systems in unknown environment with neural kernel smoothing and reinforcement learning", NEUROCOMPUTING, ELSEVIER, AMSTERDAM, NL, vol. 233, 18 November 2016 (2016-11-18), pages 34 - 42, XP029902180, ISSN: 0925-2312, DOI: 10.1016/J.NEUCOM.2016.08.108
- XIAO LI ET AL: "Reinforcement Learning With Temporal Logic Rewards", ARXIV.ORG, CORNELL UNIVERSITY LIBRARY, 201 OLIN LIBRARY CORNELL UNIVERSITY ITHACA, NY 14853, 11 December 2016 (2016-12-11), XP080738455, DOI: 10.1109/IROS.2017.8206234
- ANA GALINDO-SERRANO ET AL: "Distributed Q-Learning for Aggregated Interference Control in Cognitive Radio Networks", IEEE TRANSACTIONS ON VEHICULAR TECHNOLOGY, IEEE SERVICE CENTER, PISCATAWAY, NJ, US, vol. 59, no. 4, 1 May 2010 (2010-05-01), pages 1823 - 1834, XP011302923, ISSN: 0018-9545
- CHEN-KHONG THAM ET AL: "Multi-Agent Systems on Sensor Networks: A Distributed Reinforcement Learning Approach", INTELLIGENT SENSORS, SENSOR NETWORKS AND INFORMATION PROCESSING CONFER ENCE, 2005. PROCEEDINGS OF THE 2005 INTERNATIONAL CONFERENCE ON MELBOURNE, AUSTRALIA 5-8 DEC. 2005, PISCATAWAY, NJ, USA,IEEE, 5 December 2005 (2005-12-05), pages 423 - 429, XP010894806, ISBN: 978-0-7803-9399-8
- SANYAM KAPOOR: "Multi-Agent Reinforcement Learning: A Report on Challenges and Approaches", ARXIV.ORG, CORNELL UNIVERSITY LIBRARY, 201 OLIN LIBRARY CORNELL UNIVERSITY ITHACA, NY 14853, 25 July 2018 (2018-07-25), XP081253437

## Description

### Technical Field

The present disclosure relates to a method and system for performing event detection on a data stream, and to a method and node for managing an event detection process that is performed on a data stream. The present disclosure also relates to a computer program and a computer program product configured, when run on a computer to carry out methods for performing event detection and managing an event detection process.

### Background

The "Internet of Things" (IoT) refers to devices enabled for communication network connectivity, so that these devices may be remotely managed, and data collected or required by the devices may be exchanged between individual devices and between devices and application servers. Such devices, examples of which may include sensors and actuators, are often, although not necessarily, subject to severe limitations on processing power, storage capacity, energy supply, device complexity and/or network connectivity, imposed by their operating environment or situation, and may consequently be referred to as constrained devices. Constrained devices often connect to the core network via gateways using short range radio technologies. Information collected from the constrained devices may then be used to create value in cloud environments.

IoT is widely regarded as an enabler for the digital transformation of commerce and industry. The capacity of loT to assist in the monitoring and management of equipment, environments and industrial processes is a key component in delivering this digital transformation. Substantially continuous monitoring may be achieved for example through the deployment of large numbers of sensors to monitor a range of physical conditions and equipment status. Data collected by such sensors often needs to be processed in real-time and transformed into information about the monitored environment that represent useable intelligence, and may be trigger actions to be carried out within a monitored system. Data from individual loT sensors may highlight specific, individual problems. However, the concurrent processing of data from many sensors (referred to herein as high-dimensional data) can highlight system behaviours that may not be apparent in individual readings, even when assessed by a person possessing expert knowledge.

An ability to highlight system behaviours may be particularly relevant in domains such as smart vehicles and smart manufacturing, as well as in the communication networks serving them, including radio access networks. In such domains, the large number of sensors and the high volume of data produced mean that methods based on expert knowledge may quickly become cumbersome.

In the automotive and transportation domain, sensors are deployed to monitor the state of the vehicles and their environment and also the state of the passengers or goods transported. A condition monitoring system may improve management of the vehicles and their cargo by enabling predictive maintenance, re-routing and expediting delivery for perishable goods and optimizing transportation routes based on contract requirements. Similarly, in the smart manufacturing domain high volume data gathered by industrial loT equipment can be consumed by a condition monitoring system for equipment predictive maintenance, reducing facility and equipment downtime and increasing production output. In Radio Access Networks (RAN), data collected from devices and sensors may be used to compute specific key performance indicators (KPIs) that reflect the current state and performance of the network. Fast processing of data originating from RAN sensors can help with identifying problems which affect latency, throughput and cause packet loss.

The above discussed domains represent examples of industrial and commercial activities in which processes are used for data monitoring, which processes are required to be as far as possible "hands free", such that the processes may run continuously and adapt to changes in monitored environments, and consequently in monitored data. Such changes may include drift in data distribution. It will be appreciated that the requirements of any one domain may differ widely from those of another domain. The intelligence used to drive monitoring processes may thus be required to fulfil very different needs for different applications. IoT data analysis does not therefore lend itself to the design and pre-loading of a Machine Learning (ML) model to a monitoring node. The range of use cases and application scenarios for loT data analysis is vast, and the provision of processes that can offer an IoT data analysis that adapts independently to different use cases is an ongoing challenge.

AKSHAT AGARWAL ET AL: "Learning Transferable Cooperative Behavior in Multi-Agent Teams", ARXIV.ORG, CORNELL UNIVERSITY LIBRARY, 201 OLIN LIBRARY CORNELL UNIVERSITY ITHACA, NY 14853, 4 June 2019 (2019-06-04) discloses a multi-agent reinforcement learning framework where both agent and environmental entities communicate with each other.

CRUZ DAVID LUVIANO ET AL: "Path planning of multi-agent systems in unknown environment with neural kernel smoothing and reinforcement learning", NEUROCOMPUTING, ELSEVIER, AMSTERDAM, NL, vol. 233, 18 November 2016 (2016-11-18), pages 34-42, discloses path planning of multi-agent systems in unknown environment with neural kernel smoothing and reinforcement learning.

### Summary

It is an aim of the present disclosure to provide methods, a system, a node and a computer readable medium which at least partially address one or more of the challenges discussed above

The invention is defined in the claims. According to a first aspect of the present disclosure, there is provided a method for performing event detection on a data stream, the data stream comprising data from a plurality of devices connected by a communications network. The method comprises using an autoencoder to concentrate information in the data stream, wherein the autoencoder is configured according to at least one hyperparameter, and detecting an event from the concentrated information. The method further comprises generating an evaluation of the detected event on the basis of logical compatibility between the detected event and a knowledge base, and using a Reinforcement Learning (RL) algorithm to refine the at least one hyperparameter of the autoencoder, wherein a reward function of the RL algorithm is calculated on the basis of the generated evaluation.

The above aspect of the present disclosure thus combines the features of event detection from concentrated data, use of Reinforcement Learning to refine hyperparameters used for concentration of the data, and use of a logical verification to drive the Reinforcement Learning. Known methods for refining model hyperparameters are reliant on validation data to trigger and drive the learning. However, in many loT and other systems, such verification data is simple not available. The above described aspect of the present disclosure uses an assessment of logical compatibility with a knowledge base to drive Reinforcement Learning for the refining of model hyperparameters. This use of logical verification as opposed to data based validation means that the above method can be applied to a wide range of use cases and deployments, including those in which validation data is not available. In addition, it will be appreciated that the evaluation that is generated of the detected event is used to refine the hyperparameter(s) of the autoencoder used for information concentration, rather than being used to refine hyperparameters of a ML model that may be used for the event detection itself. In this manner, the process by which data is concentrated is adapted on the basis of the quality of event detection that can be performed on the concentrated data.

According to another aspect of the present disclosure, there is provided a system for performing event detection on a data stream, the data stream comprising data from a plurality of devices connected by a communications network. The system is configured to use an autoencoder to concentrate information in the data stream, wherein the autoencoder is configured according to at least one hyperparameter, detect an event from the concentrated information, generate an evaluation of the detected event on the basis of logical compatibility between the detected event and a knowledge base, and use a Reinforcement Learning (RL) algorithm to refine the at least one hyperparameter of the autoencoder, wherein a reward function of the RL algorithm is calculated on the basis of the generated evaluation.

According to another aspect of the present disclosure, there is provided a method for managing an event detection process that is performed on a data stream, the data stream comprising data from a plurality of devices connected by a communications network. The method comprises receiving a notification of a detected event, wherein the event has been detected from information concentrated from the data stream using an autoencoder that is configured according to at least one hyperparameter. The method further comprises receiving an evaluation of the detected event, wherein the evaluation has been generated on the basis of logical compatibility between the detected event and a knowledge base, and using a Reinforcement Learning (RL) algorithm to refine the at least one hyperparameter of the autoencoder, wherein a reward function of the RL algorithm is calculated on the basis of the generated evaluation.

According to another aspect of the present disclosure, there is provided a node for managing an event detection process that is performed on a data stream, the data stream comprising data from a plurality of devices connected by a communications network. The node comprises processing circuitry and a memory containing instructions executable by the processing circuitry, whereby the node is operable to receive a notification of a detected event, wherein the event has been detected from information concentrated from the data stream using an autoencoder that is configured according to at least one hyperparameter. The node is further operable to receive an evaluation of the detected event, wherein the evaluation has been generated on the basis of logical compatibility between the detected event and a knowledge base, and use a Reinforcement Learning (RL) algorithm to refine the at least one hyperparameter of the autoencoder, wherein a reward function of the RL algorithm is calculated on the basis of the generated evaluation

According to another aspect of the present disclosure, there is provided a computer program product comprising a computer readable medium, the computer readable medium having computer readable code embodied therein, the computer readable code being configured such that, on execution by a suitable computer or processor, the computer or processor is caused to perform a method according to any of the aspects or examples of the present disclosure.

According to examples of the present disclosure, the knowledge base referred to above may contain at least one of a rule and/or a fact, logical compatibility with which may be assessed. The at least one rule and/or fact may be generated from at least one of an operating environment of at least some of the plurality of devices, an operating domain of at least some of the plurality of devices, a service agreement applying to at least some of the plurality of devices and/or a deployment specification applying to at least some of the plurality of devices. According to such examples, the knowledge base may be populated on the basis of any one or more of the physical environment in which devices are operating, an operating domain of the devices (communication network operator, third part domain etc. and applicable rules), and/or a Service Level Agreement (SLA) and/or system and/or deployment configuration determined by an administrator of the devices. Information about the above factors relating to the devices may be available even when a validation data set of the devices is not available.

According to examples of the present disclosure, the plurality of devices connected by a communications network may comprise a plurality of constrained devices. For the purposes of the present disclosure, a constrained device comprises a device which conforms to the definition set out in section 2.1 of RFC 7228 for "constrained node".

According to the definition in RFC 7228, a constrained device is a device in which "some of the characteristics that are otherwise pretty much taken for granted for Internet nodes at the time of writing are not attainable, often due to cost constraints and/or physical constraints on characteristics such as size, weight, and available power and energy. The tight limits on power, memory, and processing resources lead to hard upper bounds on state, code space, and processing cycles, making optimization of energy and network bandwidth usage a dominating consideration in all design requirements. Also, some layer-2 services such as full connectivity and broadcast/multicast may be lacking". Constrained devices are thus clearly distinguished from server systems, desktop, laptop or tablet computers and powerful mobile devices such as smartphones. A constrained device may for example comprise a Machine Type Communication device, a battery powered device or any other device having the above discussed limitations. Examples of constrained devices may include sensors measuring temperature, humidity and gas content, for example within a room or while goods are transported and stored, motion sensors for controlling light bulbs, sensors measuring light that can be used to control shutters, heart rate monitor and other sensors for personal health (continuous monitoring of blood pressure etc.) actuators and connected electronic door locks. A constrained network correspondingly comprises "a network where some of the characteristics pretty much taken for granted with link layers in common use in the Internet at the time of writing are not attainable", and more generally, may comprise a network comprising one or more constrained devices as defined above.

### Brief description of the drawings

For a better understanding of the present disclosure, and to show more clearly how it may be carried into effect, reference will now be made, by way of example, to the following drawings in which:
Figure 1 is a flow chart illustrating a method for performing event detection on a data stream;
Figures 2a, 2b and 2c are flow charts illustrating another example of method for performing event detection on a data stream;
Figure 3 illustrates an autoencoder;
Figure 4 illustrates a stacked autoencoder;
Figure 5 illustrates event detection according to an example method;
Figure 6 illustrates a Graphical User Interface;
Figures 7a and 7b illustrate a self-adaptive loop;
Figure 8 illustrates self-adaptable knowledge retrieval;
Figure 9 illustrates functions in a system for performing event detection on a data stream;
Figure 10 is a block diagram illustrating an example implementation of methods according to the present disclosure;
Figure 11 is a flow chart illustrating process steps in a method for managing an event detection process;
Figure 12 is a block diagram illustrating functional units in a node;
Figures 13a, 13b and 13c illustrate information transformation on passage through an intelligence pipeline;
Figure 14 is a conceptual representation of an intelligence pipeline;
Figure 15 illustrates composition of an example IoT device;
Figure 16 illustrates functional composition of an intelligence execution unit;
Figure 17 is a functional representation of an intelligence pipeline;
Figure 18 illustrates an IoT landscape; and
Figure 19 illustrates orchestration of methods for performing event detection on a data stream within an loT landscape.

### Detailed description

Artificial Intelligence (Al), and in particular Machine Learning (ML), are widely regarded as the essence of autonomous solutions to industrial and commercial requirements. However, in many Al systems, the deployment of ML models and the adjustment of model hyperparameters are still highly dependent on input and expert knowledge of human engineers. It will be appreciated that a "hyperparameter" of a model is a parameter that is external to the model, and whose value cannot be estimated from data processed by the model but nonetheless shapes how the model learns its internal parameters. Model hyperparameters may be tuned for a given problem or use case.

In IoT ecosystems, it is important for machines to be able to contentiously learn and retrieve knowledge from data streams to support industrial automation, also referred to as Industry 4.0. High-level autonomous intelligent systems can minimize the need for input and insights from human engineers. However, IoT deployment environments are continuously changing, and data drift may happen at any time, rendering existing artificial intelligence models invalid. This problem is currently almost solved manually through engineer intervention to re-tune the model. Unlike many other Al scenarios in highly specified domains, including for example machine vision and natural language processing, it is very difficult to find a single learning model suitable for all loT data, owing to the vast range of application domains for loT, and the heterogeneity of loT environments. Self-adaptability for learning and retrieving knowledge from loT data is thus highly desirable to handle such challenges. End to end automation is also desirable to minimise the need for human intervention.

Existing art relating to intelligence retrieval from loT data fail to provide such automation and self-adaptability.

Conventional machine learning based solutions for knowledge retrieving have several drawbacks when considered in the context of deployments with automation requirements:
- Models are prebuilt before onboarding to the relevant hardware for deployment. In many cases such models remain highly dependent on the intervention of a human engineer to update the model for processing the data stream in real-time.
- The deployment of Al models, especially the hyperparameter adjustment, is not automated but depends on manual intervention
- IoT environments generate data that encompasses considerable variety and is highly dynamic. Thus, a pre-loaded static model can easily lose accuracy.
- The above limitations make the development of a single model for extraction of data from loT deployments highly challenging.

The following criteria thus represent desirable characteristics for a method and system that can facilitate intelligence retrieval from loT data:
- The data processing algorithm should be dynamic such that the input size and model shape can be adjusted according to specific requirements;
- The algorithm itself should be scalable based on the amount of data processing nodes, number of data sources and amount of data.
- The analysis should be conducted online for fast event detection and fast prediction;
- Reliance on prior domain knowledge (including training labels, validation data and useful data models) should be minimised, as such knowledge is frequently unavailable in loT systems.

Recent attempts at automating knowledge retrieval all exhibit significant limitations when considered against the above desirable criteria.

For example, highly automated solutions that can be implemented close to where the data is produced are extremely rare. Most automated solutions send all data to the cloud, where knowledge is extracted before conclusions are downloaded for appropriate actions. In addition, most existing solutions still require considerable human intervention, are unable to handle dynamically evolving data and lack flexibility and scalability in the core algorithms. International Patent Application PCT/EP2019/066395 discloses a method and system that seek to overcome some of the above challenges. The present disclosure seeks to enhance aspects of the solution proposed in PCT/EP2019/066395, in particular the autonomous capability to adapt to variations in data, monitored system and environment.

Aspects of the present disclosure thus provide an automated solution to enable self-adaptability in a method and system for operable to retrieve intelligence from a live data stream. Examples of the present discourse offer the possibility to automate a running loop to adjust hyperparameters a model such as a neural network according to changes from dynamic environments, without requiring data labels for training. Examples of the present disclosure are thus self-adaptable and can be deployed in a wide variety of use cases. Examples of the present disclosure minimize dependency on domain expertise.

The self-adaptability of examples of the present disclosure is based upon an iterative loop that is built on a reinforcement learning agent and a logic verifier. Feature extraction allows for reduced reliance on domain expertise. Examples of the present disclosure apply logical verification of results based on a knowledge base that may be populated without the need for specific domain knowledge. Such a knowledge base may be built from data including environmental, physical and business data, and may thus be considered as a "common sense" check that results are consistent with what is known about a monitored system and/or environment and about business requirements for a particular deployment. Such requirements, when applied to a communications network, may for example be set out in a Service Level Agreement (SLA). Examples of the present disclosure offer a solution that is free of any one specific model; adjusting model hyperparameters through a reinforcement learning loop.

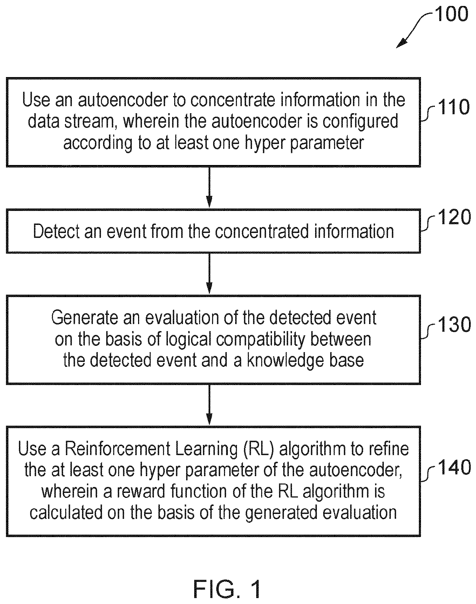

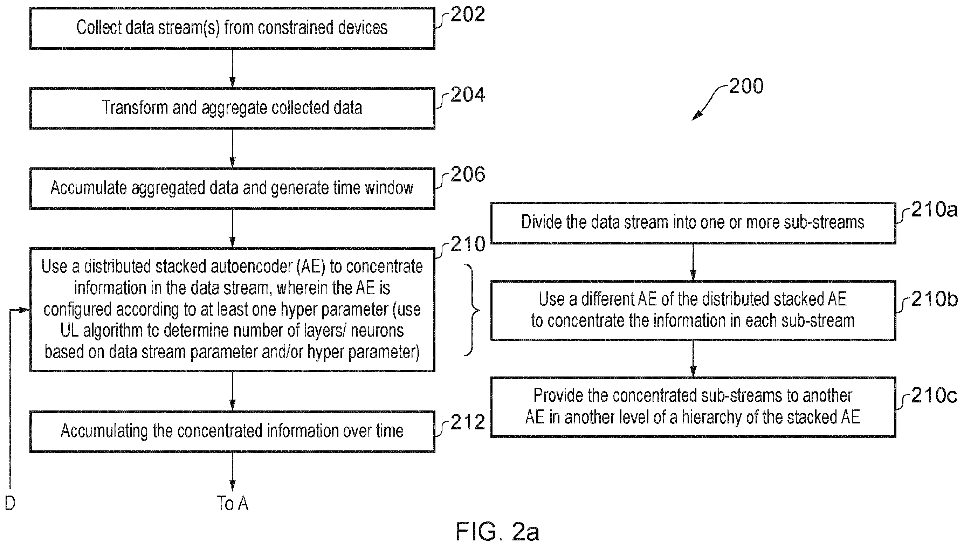

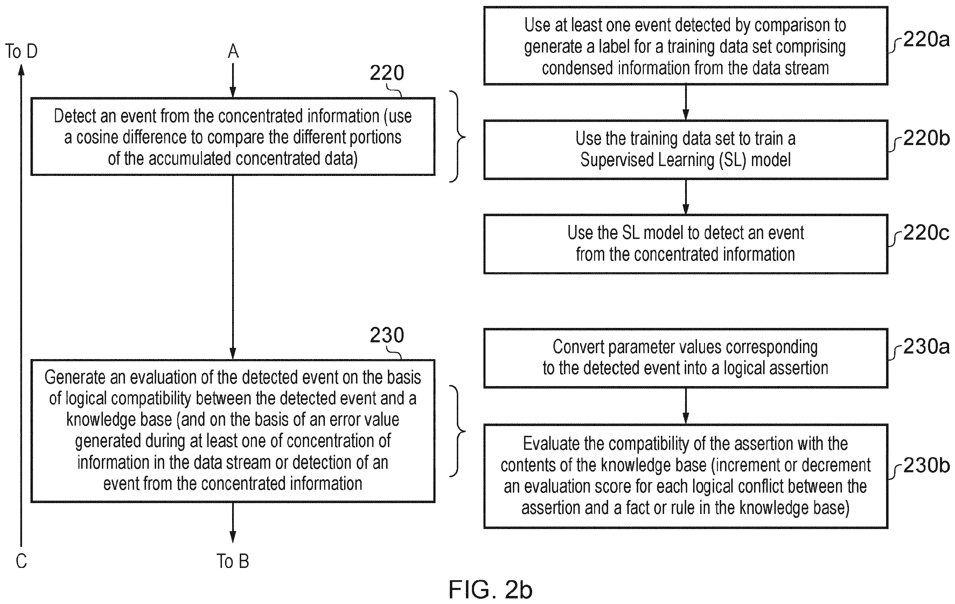

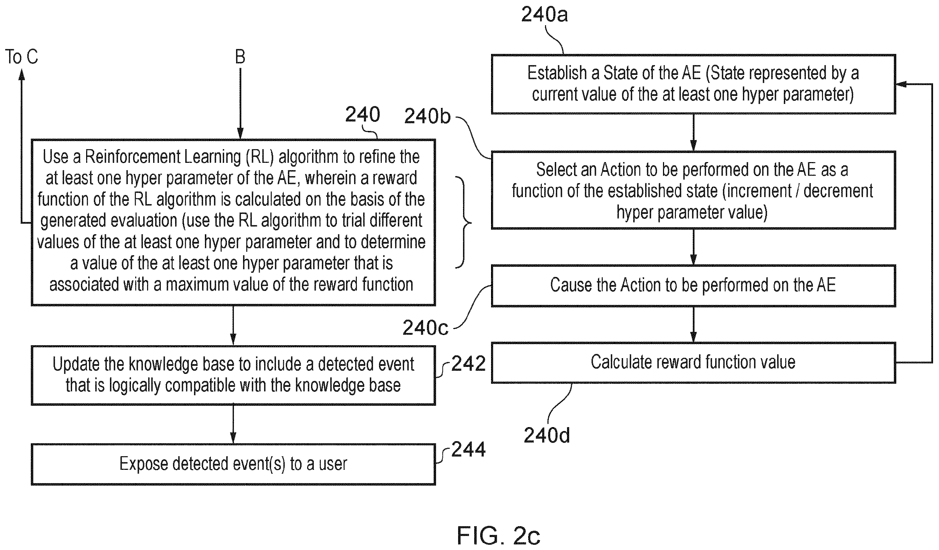

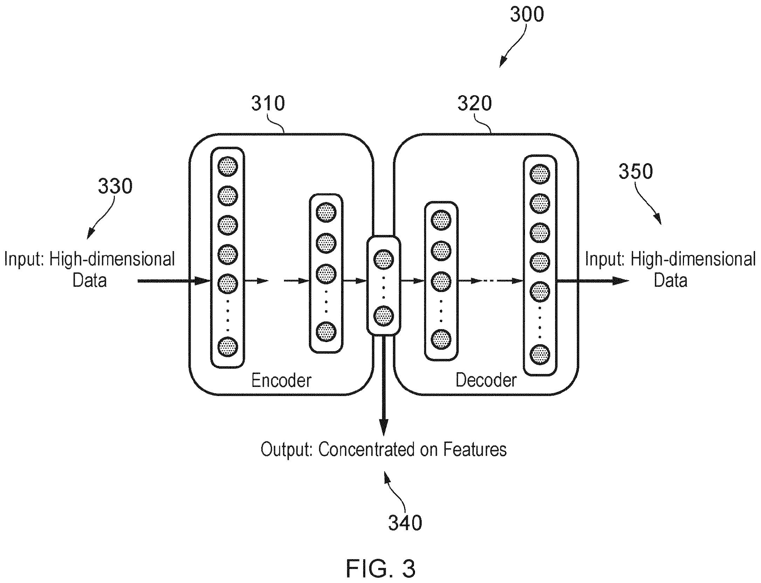

Figures 1 and 2 are flow charts illustrating methods 100, 200 for performing event detection on a data stream according to examples of the present disclosure, the data stream comprising data from a plurality of devices connected by a communications network. Figures 1 and 2 provide an overview of the methods, illustrating how the above discussed functionality may be achieved. There then follows a detailed discussion of individual method steps, including implementation detail, with reference to Figures 3 to 8.

Referring initially to Figure 1, the method 100 comprises, in a first step 110, using an autoencoder to concentrate information in the data stream, wherein the autoencoder is configured according to at least one hyperparameter. The method then comprises, in step 120, detecting an event from the concentrated information, and, in step 130, generating an evaluation of the detected event on the basis of logical compatibility between the detected event and a knowledge base. Finally, in step 140, the method comprises using a Reinforcement Learning (RL) algorithm to refine the at least one hyperparameter of the autoencoder, wherein a reward function of the RL algorithm is calculated on the basis of the generated evaluation.

The data stream may comprise data from a plurality of devices. Such devices may include devices for environment monitoring, devices for facilitating smart manufacture, devices for facilitating smart automotives, and/or devices in, or connected to a Communications Network such as a Radio Access Network (RAN) network. In some embodiments, the data stream may comprise data from network nodes, or comprise software and/or hardware collected data. Examples of specific devices may include temperature sensors, audio visual equipment such as cameras, video equipment or microphones, proximity sensors and equipment monitoring sensors.

The data in the data stream may comprise real time, or near-real time data. In some examples the method 100 may be performed in real time, such that there is minimal or little delay between collection of and processing of the data. For example, in some examples, the method 100 may be performed at a rate comparable to a rate of data production of the data stream, such that an appreciable backlog of data does not begin to accumulate. The plurality of devices are connected by a communications network. Examples of communications networks may include Radio Access Networks (RAN), wireless local area networks (WLAN or WIFI), and wired networks. In some examples, the devices may form part of the communications network, for example part of a RAN, part of a WLAN or part of a WIFI network. In some examples, the devices may communicate across the communications network, for example in a smart manufacturing or smart automotive deployment.

Referring to step 110, it will be appreciated that autoencoders are a type of machine learning algorithm that may be used to concentrate data. Autoencoders are trained to take a set of input features and reduce the dimensionality of the input features, with minimal information loss. Training an autoencoder is generally an unsupervised process, and the autoencoder is divided into two parts: an encoding part and a decoding part. The encoder and decoder may comprise, for example, deep neural networks comprising layers of neurons. An encoder successfully encodes or compresses the data if the decoder is able to restore the original data stream with a tolerable loss of data. Training may comprise reducing a loss function describing the difference between the input (raw) and output (decoded) data. Training the encoder part thus involves optimising the data loss of the encoder process. An autoencoder may be considered to concentrate the data (e.g. as opposed to merely reducing the dimensionality) because essential or prominent features in the data are not lost. It will be appreciated that the autoencoder used according to the method 100 may in fact comprise a plurality of autoencoders, which may be configured to form a distributed, stacked autoencoder, as discussed in further detail below. A stacked autoencoder comprises two or more individual autoencoders that are arranged such that the output of one is provided as the input to another autoencoder. In this way, autoencoders may be used to sequentially concentrate a data stream, the dimensionality of the data stream being reduced in each autoencoder operation. A distributed stacked autoencoder comprises a stacked autoencoder that is implemented across multiple nodes or processing units. A distributed stacked autoencoder thus provides a dilatative way to concentrate information along an intelligence data pipeline. Also, owing to the fact that each autoencoder residing in each node (or processing unit) is mutually chained, a distributed stacked autoencoder is operable to grow according to the information complexity of the input data dimensions.

Referring to step 120, the detected event may comprise any data readings of interest, including for example statistically outlying data points. In some examples, the event may relate to an anomaly. In other examples, the event may relate to a performance indicator of a system, such as a Key Performance Indicator (KPI), and may indicate unusual or undesirable system behaviour. Examples of events may vary considerably according to particular use cases or domains in which examples of the present disclosure may be implemented. In the domain of smart manufacturing, examples of events may include temperature, humidity or pressure readings that are outside an operational window for such readings, the operational window being either manually configured or established on the basis of historical readings for such parameters. Outlying readings from temperature, pressure, humidity or other sensors may indicate that a particular piece of equipment is malfunctioning, or that a process is no longer operating within optimal parameters etc. In the domain of communications networks, example events may include KPI readings that are outside a window for desirable system behaviour, or failing to meet targets set out in business agreements such as a Service Level Agreement. Examples of such KPIs for a Radio Access Network may include Average and maximum cell throughput in the download, Average and maximum cell throughput in the upload, Cell availability, total Upload traffic volume etc.

Referring to step 140, Reinforcement Learning is a technology to develop self-learning Software Agents, which agents can learn and optimize a policy for controlling a system or environment, such as the autoencoder of the method 100, based on observed states of the system and a reward system that is tailored towards achieving a particular goal. In the method 100, the goal may comprise improving the evaluation of detected events, and consequently the accuracy of event detection. When executing a Reinforcement learning algorithm, a software agent establishes a State St of the system. On the basis of the State of the system, the software agent selects an Action to be performed on the system and, once the Action has been carried out, receives a Reward rt generated by the Action. The software agent selects Actions on the basis of system States with the aim of maximizing the expected future Reward. A Reward function may be defined such that a greater Reward is received for Actions that result in the system entering a state that approaches a target end state for the system, consistent with an overall goal of an entity managing the system. In the case of the method 100, the target end stat of the autoencoder may be a state in which the hyperparameters are such that event detection in the concentrated data stream has reached a desired accuracy threshold, as indicated by generated evaluations of detected events.

Figures 2a to 2c show a flow chart illustrating process steps in another example of method 200 for performing event detection on a data stream, the data stream comprising data from a plurality of devices connected by a communications network. The steps of the method 200 illustrate one example way in which the steps of the method 100 may be implemented and supplemented in order to achieve the above discussed and additional functionality. The method 200 may be performed by a plurality of devices cooperating to implement different steps of the method. The method may be managed by a management function or node, which may orchestrate and coordinate certain method steps, and may facilitate scaling of the method to accommodate changes in the number of devices generating data, the volume of data generated, the number of nodes, functions or processes available for performing different method steps etc.

Referring initially to Figure 2a, in a first step 202, the method comprises collecting one or more data streams from a plurality of devices. As illustrated in Figure 2a, in the example method 200, the devices are constrained or loT devices, although it will be appreciated that method 200 may be used for event detection in data streams produced by devices other than constrained devices. The devices are connected by a communication network, which may compromise any kind of communication network, as discussed above. In step 204, the method 200 comprises transforming and aggregating the collected data, before accumulating the aggregated data, and dividing the accumulated data stream into a plurality of consecutive windows, each window corresponding to a different time interval, in step 206.

In step 210, the method 200 comprises using a distributed stacked autoencoder to concentrate information in the data stream, the autoencoder being configured according to at least one hyperparameter. The at least one hyperparameter may comprise a time interval associated with the time window, a scaling factor, and/or a layer number decreasing rate. The distributed stacked autoencoder may be used to concentrate information in the windowed data according to the time window generated in step 212. This step is also referred to as feature extraction, as the data is concentrated such that the most relevant features are maintained. As illustrated at step 210, using the distributed stacked autoencoder may comprise using an Unsupervised Learning (UL) algorithm to determine a number of layers in the autoencoder and a number of neurons in each layer of the autoencoder on the basis of at least one of a parameter associated with the data stream and/or the at least one hyperparameter. The parameter associated with the data steam may for example comprise at least one of a data transmission frequency associated with the data stream and/or a dimensionality associated with the data stream. A full discussion of different equations for calculating the number of layers and number of neurons per layer is provided below. The UL process may implement the training discussed above, in which an encoding loss is minimized by comparing raw input data with decoded output data.

As illustrated in Figure 2a, the process of using the distributed stacked autoencoder may comprise dividing the data stream into one or more sub-streams of data in step 210a, using a different autoencoder of the distributed stacked autoencoder to concentrate the information in each respective sub-stream in step 210b, and providing the concentrated sub-streams to another autoencoder in another level of a hierarchy of the stacked autoencoder in step 210c.

In step 212, the method 200 comprises accumulating the concentrated data in the data stream over time before, referring now to Figure 2b, detecting an event from the concentrated information in step 220. As illustrated in step 220, this may comprise comparing different portions of the accumulated concentrated data. In some examples, a cosine difference may be used to compare the different portions of the accumulated concentrated data. In some examples, as illustrated in Figure 2b, detecting an event may further comprise, in step 220a, using at least one event detected by comparing different portions of the accumulated concentrated data to generate a label for a training data set comprising condensed information from the data stream. Detecting an event may then further comprise using the training data set to train a Supervised Learning (SL) model in step 220b and using the SL model to detect an event from the concentrated information in step 220c. In some examples, only those detected events that have a suitable evaluation score (for example a score above a threshold value) may be used to generate a label for a training data set, as discussed in further detail below.

In step 230, the method 200 comprises generating an evaluation of the detected event on the basis of logical compatibility between the detected event and a knowledge base. The evaluations core may in some examples also be generated on the basis of an error value generated during at least one of concentration of information in the data stream or detection of an event from the concentrated information. Further discussion of this machine learning component of the evaluation of a detected event is provided below.

As illustrated in Figure 2b, generating an evaluation of the detected event on the basis of logical compatibility between the detected event and a knowledge base may comprise converting parameter values corresponding to the detected event into a logical assertion in step 230a and evaluating the compatibility of the assertion with the contents of the knowledge base in step 230b, wherein the contents of the knowledge base comprises at least one of a rule and/or a fact. The knowledge base may contain one or more rules and/or a facts, which may be generated from at least one of:
an operating environment of at least some of the plurality of devices;
an operating domain of at least some of the plurality of devices;
a service agreement applying to at least some of the plurality of devices; and/or
a deployment specification applying to at least some of the plurality of devices.

Thus the knowledge base may be populated according to the physical environment in which the devices are operating, an operating domain of the devices (network operator, third part domain etc. and applicable rules), and/or a business agreement such as an SLA and/or system/deployment configuration determined by an administrator of the devices. As discussed above, such information may be available in the case of loT deployments event when a full validation data set is not available.

The step 230b of evaluating the compatibility of the assertion with the contents of the knowledge base may comprise performing at least one of incrementing or decrementing an evaluation score for each logical conflict between the assertion and a fact or rule in the knowledge base. A detected event that demonstrates multiple logical conflicts with the knowledge base is unlikely to be a correctly detected event. Evaluating events in this manner, and using the evaluation to refine the model hyperparameters used to concentrate the data stream, may therefore lead to the data being concentrated in a manner to maximize the potential for accurate event detection.

Referring now to Figure 2c, the method 200 further comprises using a Reinforcement Learning (RL) algorithm to refine the at least one hyperparameter of the autoencoder, wherein a reward function of the RL algorithm is calculated on the basis of the generated evaluation. As illustrated, this may comprise using the RL algorithm to trial different values of the at least one hyperparameter and to determine a value of the at least one hyperparameter that is associated with a maximum value of the reward function. Steps 240a to 240d illustrate how this may be implemented. In step 240a, the RL algorithm may establish a State of the autoencoder, wherein the State of the autoencoder is represented by the value of the at least one hyperparameter. In step 240b, the RL algorithm selects an Action to be performed on the autoencoder as a function of the established state, wherein the Action is selected from a set of Actions comprising incrementation and decrementation of the value of the at least one hyperparameter. In step 240c, the RL algorithm causes the selected Action to be performed on the autoencoder, and, in step 240d, the RL algorithm calculates a value of a reward function following performance of the selected Action. Action selection may be driven by a policy that seeks to maximise a value of the reward function. As the reward function is based on the generated evaluation of detected events, maximising a value of the reward function will seek to maximise the evaluation score of detected events, and so maximise the accuracy with which events are detected.

In step 242, the method 200 comprises updating the knowledge base to include a detected event that is logically compatible with the knowledge base. This may comprise adding the assertion corresponding to the detected event to the knowledge base as a rule. In this manner, correctly detected events may contribute to the knowledge that is used to evaluate future detected events. Thus conflict with a previous correctly detected event may cause the evaluation score of a future detected event to be reduced. Finally, in step 244, the method 200 comprises exposing detected events to a user. This may be achieved in any practical manner that is appropriate to a particular deployment or use case. The detected events may be used to trigger actions within one or more of the devices and/or a system or environment in which the devices are deployed.

The methods 100 and 200 described above provide an overview of how aspects of the present disclosure may enable self-adaptive and autonomous event detection that can be used to obtain actionable intelligence from one or more data streams. The methods may be implemented in a range of different systems and deployments, aspects of which are now presented. There then follows a detailed discussion of how the steps of the above methods may be implemented.

A system or deployment within which the above discussed methods may operate may comprise the following elements:
1) One or more devices, which may be constrained devices such as loT devices. Each device may comprise a sensor and sensor unit to collect information. The information may concern a physical environment, an operating state of a piece of equipment, a physical, electrical, and/or chemical process etc. Examples of sensors include environment sensors including temperature, humidity, air pollution, acoustic, sound, vibration etc., sensors for navigation such as altimeters, gyroscopes, internal navigators and magnetic compasses, optical items including light sensors, thermographic cameras, photodetectors etc. and many other sensor types. Each device may further comprise a processing unit to process the sensor data and send the result via a communication unit. In some examples, the processing units of the devices may contribute to performing some or all of the above discussed method steps. In other examples the devices may simply provide data of the data stream, with the method steps being performed in other functions, nodes and elements, in a distributed manner. Each device may further comprise a communication unit to send the sensor data provided by the sensor unit. In some examples, the devices may send sensor data from a processing composition unit.
2) One or more computing units, which units may be implemented in any suitable apparatus such as a gateway or other node in a communication network. The computing unit(s) may additionally or alternatively be realized in a cloud environment. Each computing unit may comprise a processing unit to implement one or more of the above described method steps and to manage communication with other computing units as appropriate, and a communication unit. The communication unit may receive data from heterogeneous radio nodes and (IoT) devices via different protocols, exchange information between intelligence processing units, and expose data and/or insights, detected events, conclusions etc. to other external systems or other internal modules.
3) A communication broker to facilitate collection of device sensor data and exchange of information between entities. The communication broker may for example comprise a message bus, a persistent storage unit, a point-to-point communication module etc.
4) A repository for the knowledge base.

Steps of the methods 100, 200 may be implemented via the above discussed cooperating elements as individual intelligence execution units comprising:
*"Data input" (data source)*: defines how data are retrieved. Depending on the particular method step, the data could vary, comprising sensor data, monitoring data, aggregated data, feature matrices, reduced features, distances matrices, etc.,
*"Data output" (data sink)*: defines how data are sent. Depending on the particular method step the data could vary as discussed above with reference to input data.
*"Map function"*: specifies how data should be accumulated and pre-processed. This may include complex event processing (CEP) functions like accumulation (acc), windows, mean, last, first, standard deviation, sum, min, max, etc.
*"Transformation"*: refers to any type of execution code needed to execute operations in the method step. Depending upon the particular operations of a method step, the transformation operations could be simple protocol conversion functions, aggregation functions, or advanced algorithms.
*"Interval"*: depending on the protocol, it may be appropriate to define the size of a window to perform the requested computations.

The above discussed intelligence execution units may be connected together to form an intelligence (data) pipeline. It will be appreciated that in the presented method, each step may be considered as a computational task for a certain independent intelligence execution unit and the automated composition of integrated sets of intelligence execution unit composes the intelligence pipeline. Intelligence execution units may be deployed via software in a "click and run" fashion, with a configuration file for initialization. The configuration for data processing models may be self-adapted after initiation according to the methods described herein. Intelligence excitation units may be distributed across multiple nodes for resource orchestration, maximizing usage and performance of the nodes. Such nodes may include devices, edge nodes, fog nodes, network infrastructure, cloud etc. In this manner, the existence of central failure points is also avoided. Using an actor-based architecture, the intelligence execution units may be easily created in batches using initial configuration files. Implementation in this manner facilitates scalability of the methods proposed herein and their automation for deployment.

It will be appreciated that the deployment of a distributed cluster can be automated in the sense of providing an initial configuration file and then "click to run". The configuration file provides general configuration information for software architecture. This file can be provided to a single node (the root actor) at one time to create the whole system. The computation model may then be adjusted based on the shape of the data input. It will also be appreciated that some steps of the method can be combined with other steps to be deployed as a single intelligence execution unit. The steps of the methods 100, 200 together form an interactive autonomous loop. The loop may continuously adapt the configuration of algorithms and models in response to a dynamic environment.

Certain of the steps of the methods 100, 200, introduced above, are now discussed in greater detail. It will be appreciated that the following detail relates to different examples and implementations of the present disclosure.

### Step 202: Collecting data streams (collecting relevant sensor data or any relevant data in the stream)

loT is a data-driven system. Step 202 has the purpose of retrieving and collecting raw data from which actionable intelligence is to be extracted. This step may comprise the collection of available data from all devices providing data to the data stream. Step 202 may integrates multiple heterogeneous devices which may have a plurality of different communication protocols, a plurality of different data models, and a plurality of different serialization mechanisms. This step may therefore require that a system integrator is aware of the data payload (data models and serialization) so as to collect and unify the data formats.

There are multiple combinations of protocols, data models, and serializations of data which may provide a unified way to collected sensor data from multiple sources seamlessly in the same system. In this step, the "source" and "transformation functions" discussed earlier with reference to intelligence execution units implementing the steps may be particularly useful, to generate consistent and homogeneous data. For example, in a system with loT devices "X" sending raw data in a specific format, and loT devices "Y" sending JSON data, step 202 will allow the conversion of data from devices "X" to JSON. Subsequent processing units may then manage the data seamlessly, with no need for additional data conversions. The way that a certain unit forwards data to the next unit is defined in the "sink". The "sink" could be specified, in the above example, to ensure that output data is provided in JSON format.

### Step 204: Transforming and aggregating the data in the streams;

It will be understood that step 202 may be executed in a distributed and parallel manner, and step 204 may therefore provide central aggregation to collect all sensor data, on the basis of which data frames in high-dimension data may be created.

Data may be aggregated on the basis of system requirements. For example, if analysis of an environment or analysis of a certain business process is required to be based on data collected from a specific plurality of distributed sensors/data sources, then all the data collected from those sensors and sources should be aggregated. In many cases, the collected data will be sparse; as the number of categories within collected data increases, the output can end up as a high-dimensional sparse data frame.

It will be appreciated that the number of intelligence execution units, and in some examples, the number of physical and/or virtual nodes executing the processing of steps 202 and 24 may vary according the number of devices from which data is to be collected and aggregated, and the quantity of data those devices are producing.

### Step 206: Accumulating high-dimensional data and generating window

In order to trigger the concentration of data and build/refine suitable models, a specific size of the time window should be defined, within which data may be accumulated. This step groups mini-batches of data according to window size. The size of the windows may be specific to a particular use case and may be configurable according to different requirements. Data may be accumulated on memory or a persistent storage depending on requirements. According to the explanation of intelligence execution units via which examples of the present disclosure may be implemented, this step is realized using the "map function". In some examples, the operations of this step may be simply to accumulate the data into an array using the "map function".

### Step 110/210: (Using optimized hyperparameters from a previous iteration of the method), establishing a deep autoencoder based model and conducting feature extraction/information concentration on the data of each time window

Once data has been accumulated over a sufficient number of windows, feature extraction/data concentration may be triggered. Initially, a deep autoencoder is constructed based on the accumulated data. Feature extraction is then performed by applying the autoencoder models to the accumulated data, processing the data through the stacked autoencoders of the deep encoder. A single autoencoder 300 is illustrated in Figure 3. As discussed above, an autoencoder comprises an encoder part 310 and a decoder part 320. High dimensional input data 330 is input to the encoder part and concentrated data 340 from the encoder part 310 is output from the autoencoder 300. The concentrated data is fed to the decoder part 320 which reconstructs the high dimensional data 350. A comparison between the input high dimensional data 330 and the reconstructed high dimensional data 340 is used to learn parameters of the autoencoder models.

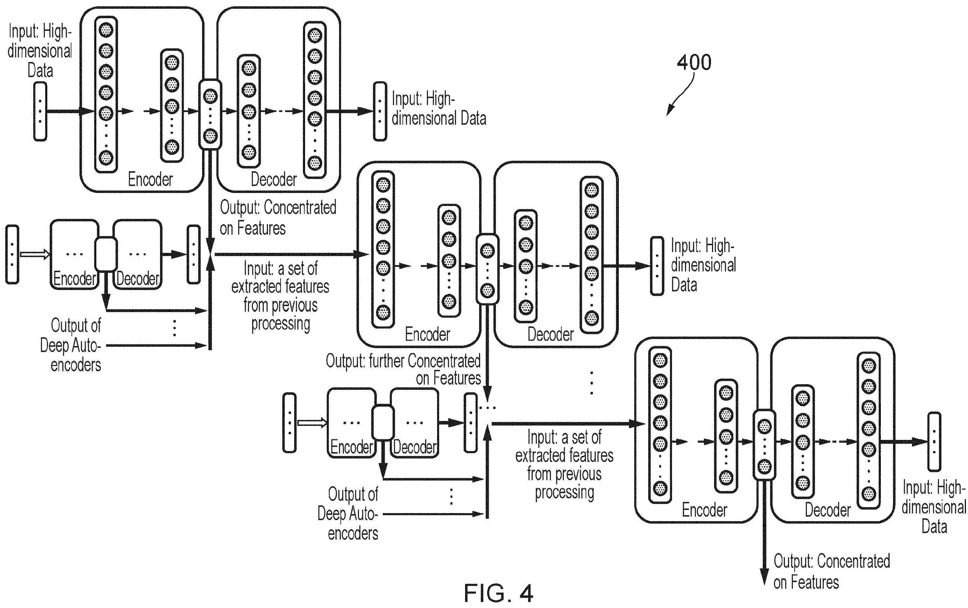

Figure 4 illustrates a stacked autoencoder 400. The stacked autoencoder 400 comprises a plurality of individual autoencoders, each of which outputs its concentrated data to be input to another autoencoder, thus forming a hierarchical arrangement according to which data is successively concentrated.

Each sliding window defined in earlier steps outputs a data frame in temporal order with a certain defined interval. In step 110/210, feature extraction may be performed in two dimensions:
(a) compression of information carried by the data in the time dimension. For example a deployed sensor may transmit data in every 10 milliseconds. A sliding window of 10 seconds duration will therefore accumulate 1000 data items. Feature extraction may enable summarizing of the information of the data frame and provision of comprehensive information by decreasing the temporal length of the data frame.
(b) concentration of information carried by the data in feature dimension. Sensor data collected from loT sensors can be very complex owing to its high-dimensional features. In many cases, it is almost impossible to understand the running status of an entire loT system by looking at collected sensor data sets, even for domain experts. High-dimensional data may therefore be processed to extract the most significant features and decrease any unnecessary information complexity. The extracted features from one or a group of deep autoencoders can be the input of another deep autoencoder.

When the output of one or several deep autoencoders is utilized as an input of another deep autoencoder, this forms a stacked deep autoencoder as discussed above and illustrated in Figure 4. A stacked deep autoencoder provides a dilatative way to concentrate information along an intelligence data pipeline. A stacked deep autoencoder may also grow according to the information complexity of input data dimensions and may be fully distributed to avoid computation bottleneck. As output, step 110/210 sends concentrated and extracted information carried by the collected data. The large volume of high-dimensional data is thus rendered much more manageable for subsequent computation.

As discussed above, each encoder part and decoder part of an autoencoder may be realized using a neural network. Too many layers in the neural network will introduce unnecessary computation burden and create latency for the computation, while too few layers risks to weaken the expressive ability of the model and may impact performance. An optimal number of layers for an encoder can be obtained using the formula: $\begin{matrix}Number _ of _ hidden _ layers \\ = int \left(\begin{matrix}Sliding _ windows _ interval \\ ∗ data _ transmitting _ frequency / \left(\begin{matrix}2 ∗ scaling _ factor \\ ∗ number _ of _ dimensions\end{matrix}\right)\end{matrix}\right)\end{matrix}$

Where the *scaling_factor* is a configurable hyperparameter that describes, in general, how the model will be shaped from short-wide to long-narrow.

The deep autoencoder may also introduce the hyperparameter *layer_number_decreasing_rate* (e.g. 0.25) to create the size of output in each layer. For each layer in the encoder: $\begin{matrix}Encoder _ Number _ of _ layer _ \left(N+1\right) = \\ int \left(Encoder_Number_of_layer_N∗\left(\begin{matrix}1 - \\ Layer _ Number _ Decreasing _ Rate\end{matrix}\right)\right) ;\end{matrix}$

Scaling factor, time interval and layer number decreasing rate are all examples of hyperparameters which may have been optimized during a previous iteration of the method 100 and/or 200.

The number of each layer in the decoder corresponds to the number of each layer in the encoder. The unsupervised learning process of building the stacked deep autoencoders has the purpose of concentrating information by extracting features from the high-dimensional data. Computation accuracy/loss of autoencoders may be conducted using K-fold cross-validation, where the K number has default of 5 unless further configuration is provided. A validation computation may be conducted inside each map function. For the stacked deep autoencoder, verification is then conducted for each single running autoencoder.

### Step 212: Accumulating extracted features (based on optimized hyperparameters from an earlier iteration of the method)

Step 212 may be implemented using the "map function" of an intelligence execution unit as described above. The map function accumulates the reduced features for a certain amount of time, or for a certain amount of samples. In this step, each map function is a deep autoencoder as shown in Figure 4. As discussed in the previous step, the feature extractions are chained and can be iteratively conducted close to the data resources in quick time. Extracted features are accumulated with the moving of sliding windows. For example, if the feature extraction described in previous steps is for each 10 seconds, during this accumulation step it may be envisaged that a system requires anomaly detection within a time period of one hour. A time range for buffering samples can be set as 60 seconds and will accumulate 360 data by monitoring and extract the features from the data generated in each 10 milliseconds. Such accumulating lays the basis for concentrating information in the time dimension. From the example, it can be seen that the raw data generated in every 10 milliseconds for each data piece is concentrated to data generated in 1 second for every 6 data pieces after the processing of the stacked deep autoencoder.

### Step 120/220: Performing event detection - conducting insight retrieval from the condensed data/extracted features (based on optimized hyperparameters from an earlier iteration of the method)

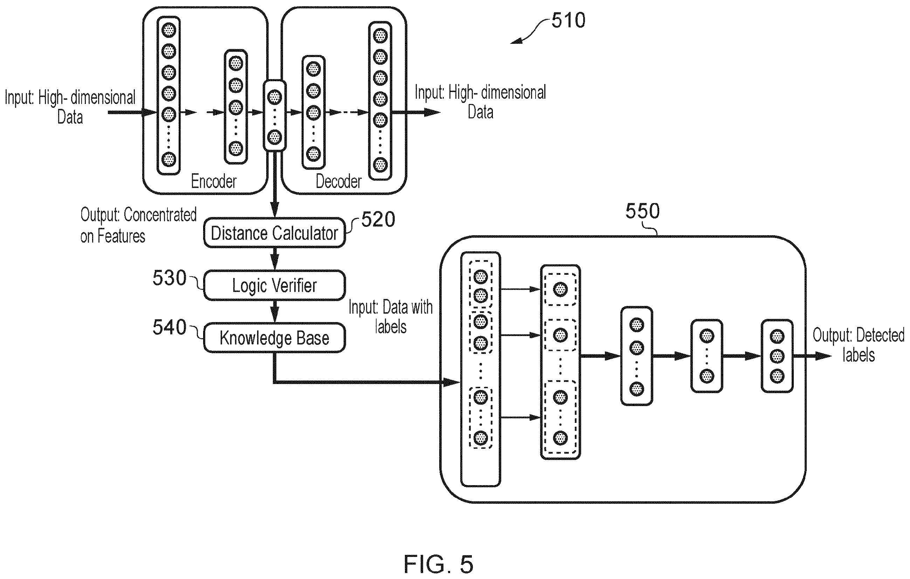

Step 120/220 analyzes the accumulated reduced feature values and compares them in order to evaluate in which time windows an anomaly has appeared. For example, a time slot with a higher distance from other time slots may be suggested as an anomaly over an accumulated time. This step is conducted based on the accumulation of previously extracted features. The event detection may be conducted in two phases: the first phase detects events based on distance calculation and comparison. These events are subject to logic verification in step 130/230 and those events that pass logic verification are then used to assemble labels for a training data set. The training data set is used to train a Supervised Learning model to perform event detection on the concentrated, accumulated data in the second phase of event detection. Both phases of event detection are illustrated in Figure 5.

In the first phase, for results coming from step 110/210 (and 212 if performed), distance measuring may be used to calculate the pairwise distances between elements in the accumulated output of feature extraction. Step 110/210 is represented by the single deep autoencoder 510, although it will be appreciated that in many implementations, step 110/210 may be performed by a stacked deep autoencoder as discussed above. The output from autoencoder 510 is input to distance calculator 520. The distance calculated in the distance calculator 520 may be cosine distance, and the pairwise distances may accordingly form a matrix of distance. As the extracted features are reconstructed using Markov Chain Monte Carlo (MCMC) method, the output is randomly generated which keeps the same probabilistic distribution feature. The distribution is unknown, meaning that measuring distances such as the Euclidean distance may be not meaningful for many cases. It is the angle between vectors that is of greatest interest, and so cosine distance may be the most effective measure.

If, in an example, the preceding steps have accumulated N output, marked as {*F*₀, *F*₁, *F*₂, ... *F*_{*n*-1}}; then a distance matrix may be computed in the following way:

**Table 1: Form the Distance Matrix**

| | | | | | | |
|---|---|---|---|---|---|---|
| The distance matrix based on output of feature extraction | | *F*₀ | *F*₁ | *F*₂ | ... | *F*_{*n-*1} |
| | *F*₀ | *Distance*(*F*₀, *F*₀) | *Distance*(*F*₁*, F*₀) | *Distance*(*F*₂*, F*₀) | ... | *Distance*(*F*_{*n-*1}, *F*₀) |
| | *F*₁ | *Distance*(*F*₀, *F*₁) | *Distance*(*F*₁*, F*₁) | *Distance*(*F*₂, *F*₁) | ... | *Distance*(*Fₙ₋₁*, *F*₁) |
| | *F*₂ | *Distance*(*F*₀, *F*₂ ) | *Distance*(*F*₁, *F*₂) | *Distance*(*F*₂, *F*₂) | ... | *Distance*(*F*_{*n-*1}, *F*₂) |
| | ... | ... | ... | ... | ... | ... |
| | *F*_{*n*-1} | *Distance* (*F*₀*, F*_{*n*-1}) | *Distance* (*F*₁*, F*_{*n*-1}) | *Distance* (*F*₂*, F*_{*n*-1}) | ... | *Distance* (*F*_{*n*-1}, *F*_{*n*-1}) |
| The Avg of distances | | *Avg* (*Distance* (*F*₀*, Fₓ*) | *Avg* (*Distance*(*F*₁*, Fₓ*)) | *Avg* (*Distance*(*F*₂*, Fₓ*)) | ... | *Avg* (*Distance*(*F*_{*n-*1}*, Fₓ*)) |

In the field called "The distance Avg", for each extracted feature, its average distance to the rest of extracted features in the same buffering time window is calculated. The calculated results are written into storage from the buffering, which may facilitate visualization.

Events detected though comparison of distances in the distance calculator are then passed to a logic verifier 530 to evaluate compatibility with the contents of a knowledge base 540. This step is discussed in further detail below. Verified events are then used to generate labels for a training data set. Thus concentrated data corresponding to an event detected through distance calculation and comparison is labelled as corresponding to an event. In the second phase of event detection, this labelled data in the form of a training data set is input to a supervised learning model, implemented for example as neural network 550. This neural network 550 is thus trained using the training data to detect events in the concentrated data stream. It will be appreciated that training of the neural network 550 may be delayed until a suitable size training data set has been generated through event detection using distance calculation.

### Step 130/230: Generating an evaluation of a detected event - logic verification to detect conflicts with a knowledge base and provide a verification result for the reinforcement learning

This step conducts logic verification on the events detected in the first phase of event detection so as to exclude detected events that have logic conflicts with the existing common knowledge in the domain, assembled in a knowledge base. An evaluation score of an event may reflect the number of logic conflicts with the contents of the knowledge base. A penalty table may be created by linking the logic verification results to a current configuration, and may drive a reinforcement learning loop through which hyperparameters of the models used for concentration of data, and optionally event detection, may be refined.

The logic verification performs logic conflict checking of detected events against facts and/or rules that have been assembled in the knowledge base according to available information about the devices generating data, their physical environment, their operating domain, business agreements relating to the devices, deployment priorities or rules for how the deployment should operate, etc. This information can be populated without expert domain knowledge. For example, the outdoor temperature of Stockholm in June should be above 0 degrees. It will be appreciated that the knowledge base is thus very different to a validation data set, which is often used to check event detection algorithms in existing event detection solutions. A validation data set enables comparison of detected events with genuine events and can only be assembled with extensive input from domain experts. In addition, in many loT deployments, the data for a validation data set is simply unavailable. In contrast comparison with a validation data set, the present disclosure comprises an evaluation of logical conflicts between detected events and a knowledge base comprising facts and/or rules generated from information this is readily available, even to those without expert knowledge of the relevant domains. The logic verification may serve to filter out erroneous detected events, as well as populating a penalty table which describes the number of logic conflicts of a given detected event. The penalty table may be used as a handle for self-adaptable model refining by driving reinforcement learning as discussed below.

The logical verifier may comprise a reasoner that is based on second-order logic to verify whether the detected anomaly has any logic confliction with the existing knowledge relevant to a given deployment and populated into the knowledge base. A detected events from the preceding step is streamed to a processor implementing logic evaluation in the form of an assertion.

For example: considering a system defined by a set of parameters marked as *S* = {*a, b, c, d ... k*}*,* a suspicious behaviour may be detected by satisfying {*a = XY, b = XXY, c = YY, d = YXY .... k = Y*}*.* This statement is easily translated to an assertion as: *Assertion* = ({*a = XY,b = XXY, c = YY, d = YXY .... k = Y*} = 0). This assertion may be verified based on the existing knowledge base, by running through a logic-based engine. The knowledge base may include two parts: a fact base and a rule base. Both parts may provide a Graphical User Interface (GUI) for interaction with users. In the present disclosure, the schema proposed for the knowledge base is based on a close-space assumption, which means the logic verification is conducted using available knowledge which may be termed "common-sense", and thus is readily available from the known characteristics of the devices, their environment and/or any business or operating principles or agreements. Population of the knowledge base may be guided by a GUI as shown in 6.

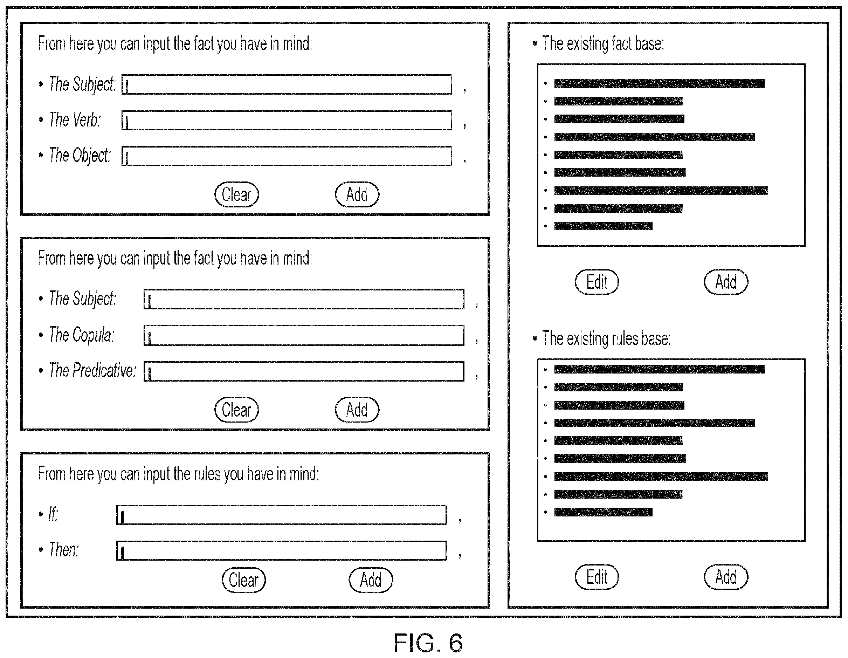

The semantic schemas "*Subject + Verb + Object*" and "*Subject + Copula + Predicative*" may be mapped to the fact space as illustrated in Figure 6. For example, in a smart manufacturing use case in which a production line includes robotic arms that are designed to rotate and in which the temperature cannot exceed 100 degrees Celsius, this "common sense" knowledge about how the production line operates can be translated into a fact space for logical verification as follows : "Robotic arms that are rotating are healthy" can be semantically mapped to (*Roboticsᵣₒₜₐₜₑ* == *True)* => (*Roboticsₕₑₐₗₜₕ == True*), and "Robotic arms that are above 100 degrees Celsius are not healthy" can be semantically mapped to (*Roboticsₜₑₘₚ* ≥ 100) => (*Roboticsₕₑₐₗₜₕ == False*). In this case, if event detection generates an anomaly which is expressed as the assertion: (*Roboticsᵣₒₜₐₜₑ == True*)*V* (*Roboticₜₑₘₚ* ≥ *100*) *=>*(*Roboticsₕₑₐₗₜₕ == False*), the logic verification will provide a "False" judgement, as this assertion represents a logical conflict with the fact that rotating robotic arms are healthy, and healthy robotic arms cannot exceed 100 degrees Celsius. For the self-adaptable training, performed via reinforcement learning, in later steps, each "False" judgement indicates a logic conflict, and the number of logic conflicts provides the number of facts and/or rules that the provided assertion has either direct or indirect conflict with.

The logical verification may be used to generate a JSON document which describes the current hyperparameters of the stacked autoencoder and the number of detected logic conflicts, as shown below. For Example, the following JSON could define the input configuration for the subsequent self-adaptive learning step.

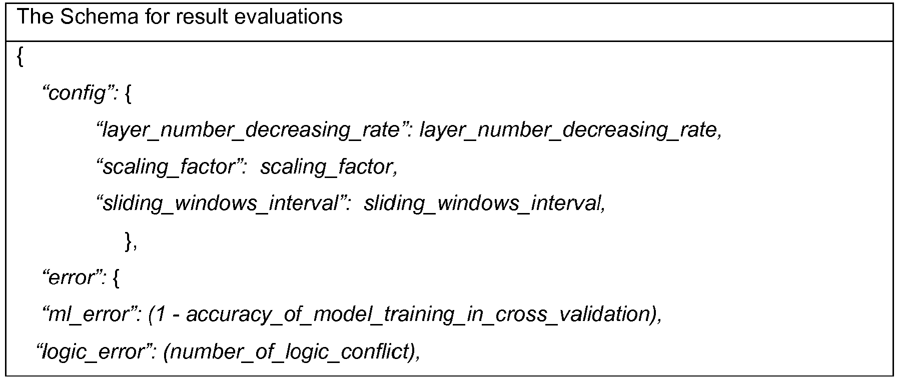

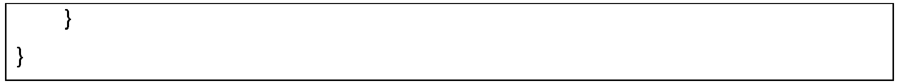

### Step 242: Updating verified insights into the knowledge base to support supervised learning;

The recommended assertions after verification may be updated to the existing knowledge base in step 212. The assertions can be updated using, for example, the JSON format. A data repository may include within it both the knowledge base and the data labels generated from verified detected events and used to train a supervised learning model for second phase event detection. The assertions updated to the knowledge base may in the format described in semantic schema "*Subject + Verb + Object" .*

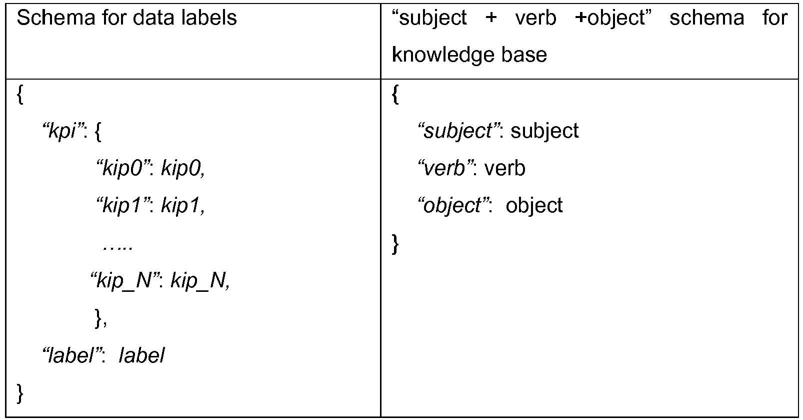

### Step 140/240: Using a RL algorithm to refine hyperparameters - self-adaptable model refining

This step conducts self-adaptable refining of the models for data con centration/feature extraction through reinforcement learning. The reinforcement learning is driven by the information in the penalty table, that is populated from the evaluations of detected events based on logic verification and, in some examples, also on ML error. The reinforcement learning refines the hyperparameters of the autoencoder models to optimize the effectiveness and accuracy of event detection in the concentrated data. The RL algorithm may in some examples be Q learning, although other RL algorithms may also be envisaged.

The self-adaptability loop is formed by a process of state-action-reward-state using reinforcement learning. As noted above, RL can be performed using a variety of different algorithms. For the purposes of the methods 100, 200, it is desirable for the RL algorithm to fulfil the following conditions:
(1) support for model-free reinforcement learning, which can be applied in various environments with high dynamicity
(2) support for value-based reinforcement learning, which specifically aims to improve evaluation results through optimization of hyperparameters
(3) support for updating in a Temporal-difference manner, so that configurations of computation models can be continuously improved during the training until an optimal solution is found
(4) low-cost and facilitating fast iteration, meaning reduced resource and capacity requirements for equipment on which the algorithm is to run.

The Q learning algorithm is one option that substantially fulfils the above conditions, and may be integrated with the data concentration/feature extraction models of the presently proposed methods via optimization of the hyperparameters of these models. The self-adaptable model refining process reinforces the adjustment of hyperparameters based on the evaluation results. The evaluation results are then mapped to a table as shown below.

**Table 2: Evaluation results**

| | *Indr * (1-0.05)* | *Indr*1* | *Indr * (1+0.05)* | *scf* (1-0.05)* | *scf*1* | *scf* (1+0.05)* | *swi* (1-0.05)* | *swi*1* | *swi* (1+0.05)* |
|---|---|---|---|---|---|---|---|---|---|
| *mle* | --- | --- | --- | --- | --- | --- | --- | --- | --- |
| *lge* | --- | --- | --- | --- | --- | --- | --- | --- | --- |

| | | | | | | | | | |
|---|---|---|---|---|---|---|---|---|---|
| *Indr: layer_number_decreasing_rate;* *scf: scaling_factor;* *swi: sliding_windows_interval;* *mle: ml_error;* *Ige: logic_error* | | | | | | | | | |

Each column of the table represents an adjustment Action on the hyperparameters for the data concentration/feature extraction autoencoder models. Each row represents machine learning error and logic error respectively following the corresponding Action. The reward y for each status is: $reward_for_mle = 0 - mle \times 100 ,$ and reward_for_lge = 0 - lge

A quality score Q of an Action in a given state may be calculated from the Bellman equation; each adjustment Action on the configuration is marked as *d*; the error status is marked as *e*; and each time iteration is marked as *t.* Thus, the *Q* function value for each action in a current state is expressed as *Q*(*eₜ, dₜ*)*.*

The initial status *Q*(*e*₀*, d*₀) = 0 and Q is updated by: $\begin{matrix}{Q}_{updated} \left({e}_{t}, {d}_{t}\right) \\ = Q \left({e}_{t}, {d}_{t}\right) \\ + 0.05 \times \left[{γ}_{t + 1}+0.65\times {max}_{d}Q\left({e}_{t + 1}+d\right)-Q\left({e}_{t}, {d}_{t}\right)\right]\end{matrix}$

The process for self-adaption is an iterative loop in which *Q*(*eₜ, dₜ*) is updated until the *Q_{updated}*(*eₜ, dₜ*) *==* Q(*eₜ, dₜ*). Once this condition is achieved, the concentrated features with the current adjusted values of the hyperparameters are output and the process moves on to the next sliding window.

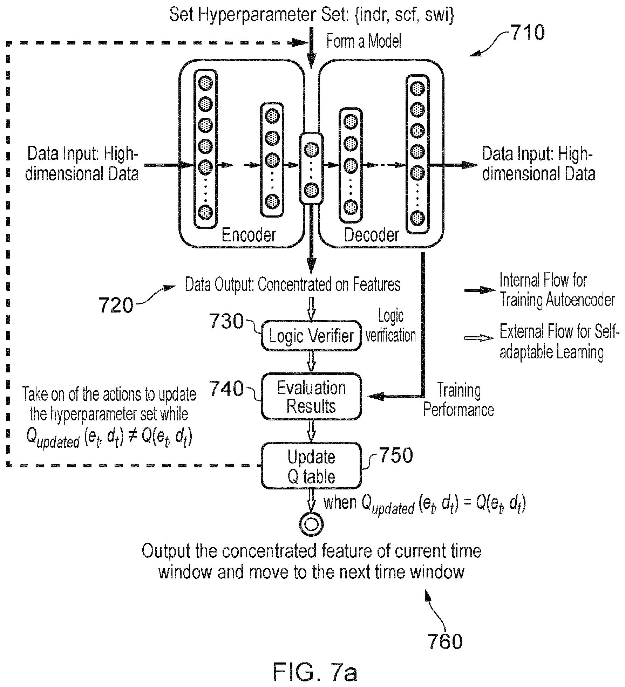

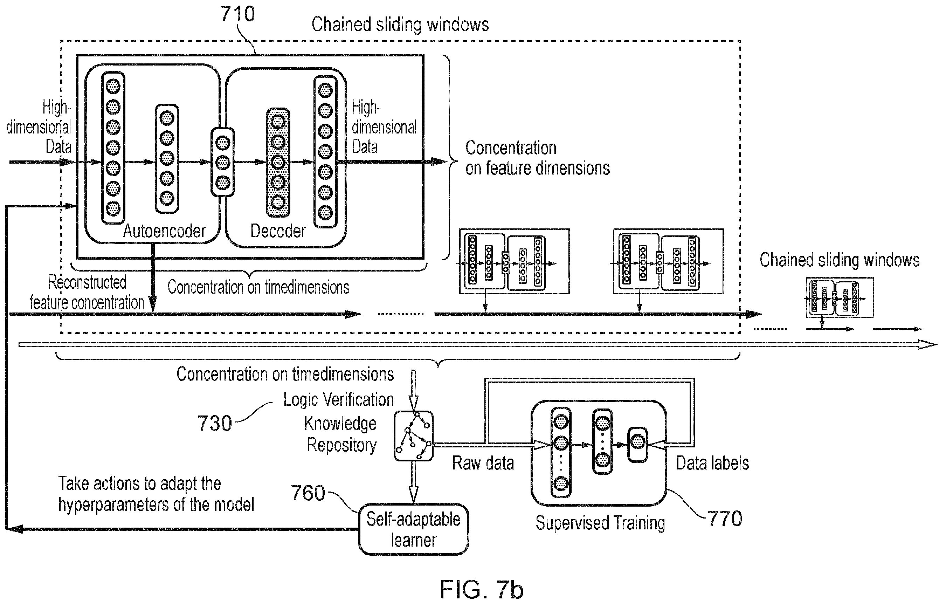

The self-adaptive loop is illustrated in Figures 7a and 7b. Referring initially to Figure 7a, the deep stacked autoencoder (represented by autoencoder 710), is configured according to certain hyperparameters. The autoencoder outputs concentrated data 720 to event detection via distance calculation and comparison (not shown). Detected events are then verified in a logic verifier 730 in which an evaluation of the detected events is generated. The results of this evaluation 740 are used to drive reinforcement learning, updating a Q table 740 which is used to evaluate adjustment Actions performed on the hyperparameters according to which the autoencoder 710 is configured. Once further increase of the Q score is negligible, optimal values of the model hyperparameters have been found, and the resulting concentrated data from the current time window 760 may be output, for example to event detection via supervised learning, as discussed above with reference to step 120/220.

Referring now to Figure 7b, data concentration performed by the autoencoder 710 is illustrated in greater detail, with accumulation in time of concentrated data also illustrated. In addition to the use of verification results for detected events to drive optimization of hyperparameters for the autoencoder 710 in the self-adaptable learner 760, Figure 7b also illustrates the use of detected verified events to generate a training data set for supervised learning 770 to detect events in the concentrated data.

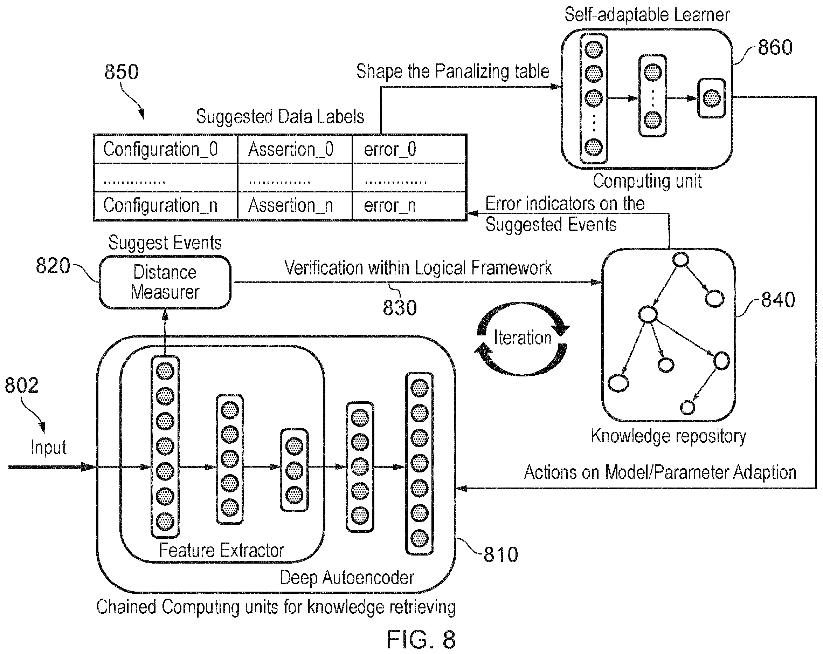

Self-Adaptable knowledge retrieval is illustrated in Figure 8. Referring to Figure 8, input data 802 is' presented a stacked deep autoencoder 810. Concentrated data/extracted features are forwarded to a distance calculator 820 which detects events. Detected events are verified within the logical framework 830 discussed above, and the output of this verification is updated to a knowledge repository 840. The knowledge repository 840 may be used to populate a penalty table 850 in which configuration of the autoencoder 810 (i.e. hyperparameter values), assertions corresponding to detected events and errors corresponding to those assertions following logic evaluation are stored. The penalty table drives a self-adaptive learner 860 on which a RL algorithm is run to refine the hyperparameters of the autoencoder 810 so as to maximize the evaluation score of detected events. In some examples, providing light weight operational implementation, updating of the configuration files described may be performed only on collection of new data. Updating is part of a closed iteration loop according to which the hyperparameter values in the configuration file are updated on the bases of evaluation results, as described above. This iteration is time-freezing, as illustrated in Figure 8, which means the same data frame withdrawal from the same time windows will continue to iterate until an optimal configuration for the current data sets is obtained, at which point the computation will move to consider data in the next time windows.

### Step 244: Expose obtained insights;

This step may be implemented and performed using external storage. In this step, the system exposes data to other components, facilitating integration of the presented methods with an loT ecosystem. For example, results can be exposed to the database for visualization by a user. In this manner, in addition to support for automated analysis, the methods presented herein may enrich human knowledge for decision support. By integrating with process component, the methods may additionally enhance business intelligence. Detected events and associated data may be exposed to other systems including management or Enterprise Resource Planning (ERP), or may be made available to actuation or visualization systems within the same computing unit including LEDs, LCD, or any other means of providing feedback to a user.

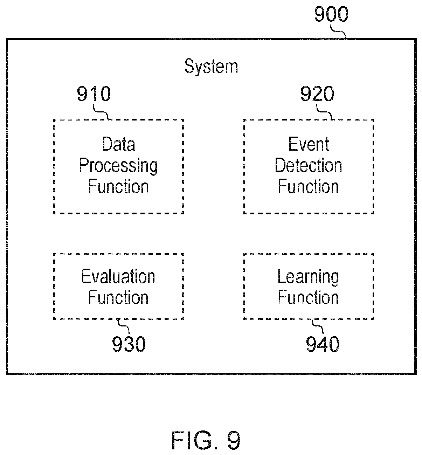

As discussed above, examples of the present disclosure also provide a system for performing event detection on a data stream, the data stream comprising data from a plurality of devices connected by a communications network. An example of such system 900 is illustrated in Figure 9 and is configured to use an autoencoder, which may be a stacked distributed autoencoder, to concentrate information in the data stream, wherein the autoencoder is configured according to at least one hyperparameter. The system 900 is further configured to detect an event from the concentrated information and to generate an evaluation of the detected event on the basis of logical compatibility between the detected event and a knowledge base. The system 900 is further configured to use a Reinforcement Learning (RL) algorithm to refine the at least one hyperparameter of the autoencoder, wherein a reward function of the RL algorithm is calculated on the basis of the generated evaluation.

As illustrated in Figure 9, the system may comprise a data processing function 910 configured to use an autoencoder to concentrate information in the data stream, wherein the autoencoder is configured according to at least one hyperparameter, and an event detection function 920 configured to detect an event from the concentrated information. The system may further comprise an evaluation function 930 configured to generate an evaluation of the detected event on the basis of logical compatibility between the detected event and a knowledge base, and a learning function 940 configured to use a RL algorithm to refine the at least one hyperparameter of the autoencoder, wherein a reward function of the RL algorithm is calculated on the basis of the generated evaluation.

One or more of the functions 910, 920, 930 and/or 940 may comprise a virtualised function running in the cloud, and/or may be distributed across different physical nodes.

The evaluation function 930 may be configured to generate an evaluation of the detected event on the basis of logical compatibility between the detected event and a knowledge base by converting parameter values corresponding to the detected event into a logical assertion and evaluating the compatibility of the assertion with the contents of the knowledge base, wherein the contents of the knowledge base comprises at least one of a rule and/or a fact. The evaluation function may be further configured to generate an evaluation of the detected event on the basis of logical compatibility between the detected event and a knowledge base by performing at least one of incrementing or decrementing an evaluation score for each logical conflict between the assertion and a fact or rule in the knowledge base.

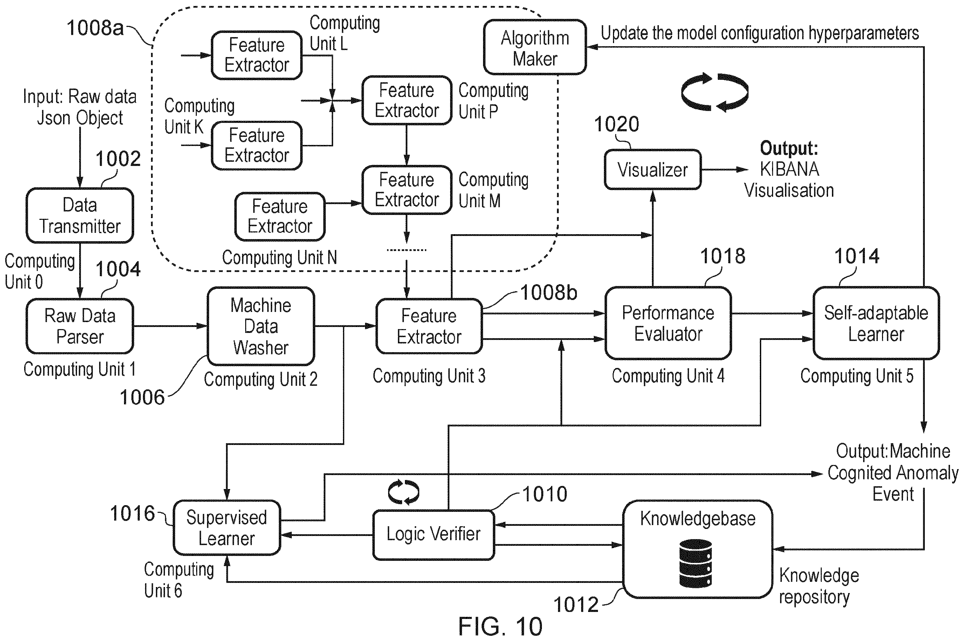

Figure 10 is a block diagram illustrating an example implementation of methods according to the present disclosure. The example implementation of Figure 10 may for example correspond to a smart manufacturing use case, which may be considered as a likely application for the methods presented herein. Smart manufacturing is an example of a use case involving multiple heterogeneous devices and/or equipment which are geographically distributed, and in which there is a requirement to understand performance of an automated production line along which the devices are deployed and to detect anomalous behavior. In addition, it is desirable that solutions to retrieve insights/knowledge from the automated industrial manufacturing system should be automated and that data processing models should be self-updating.

As discussed above, domain experts are frequently unable to provide manual assessment of the data and validation data sets, especially when the production line is newly introduced or assembled. In addition, in modern plants, the categories of deployed equipment/sensor devices can be very complex and frequently updated or changed, with such changes resulting in degrading of the performance of pre-existing data processing models. Equipment/sensor devices may be serving different production units in different geographical locations (heterogeneity of devices and distributed topology) and production may be scaled up and/or down for different environments or business priorities. It is desirable to data processing to be in real-time with fast production of results.

Referring to Figure 10, each block may correspond to an intelligence execution unit, as discussed above, which unit may be virtualized, distributed across multiple physical nodes, etc. The process flow of Figure 10 is substantially as described above, with data pre-processing performed in units 1002,1004,1006 and feature extraction/data concentration performed by the stacked distributed autoencoder 1008a, 1008b. Events detected in the concentrated data using distance calculation and comparison are evaluated in a logic verifier 1010 using logic compatibility with the contents of a knowledge base 1012. The results of the evaluation are used to drive reinforcement learning in a self-adaptable learner, which optimizes the hyperparameters of the autoencoder 1008. Verified detected events are also used to generate labels for a training data set which is used to perform supervised learning for the detection of events in the concentrated data. Performance of the system is evaluated in a performance evaluator 1018 and presented to user via a visualizer 1020.

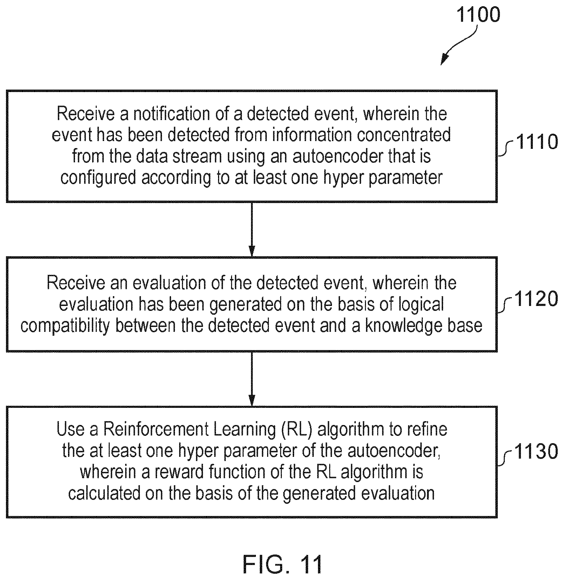

It will be appreciated that the methods 100, 200 may also be implemented through the performance on individual nodes or virtualized functions of node-specific methods. Figure 11 is a flow chart illustrating process steps in one such method 1100. Referring to Figure 11, the method 1100 for managing an event detection process that is performed on a data stream, the data stream comprising data from a plurality of devices connected by a communications network, comprises, in a first step 1110, receiving a notification of a detected event, wherein the event has been detected from information concentrated from the data stream using an autoencoder that is configured according to at least one hyperparameter. In step 1120, the methods 1100 comprises receiving an evaluation of the detected event, wherein the evaluation has been generated on the basis of logical compatibility between the detected event and a knowledge base. In step 1130, the methods comprises using a Reinforcement Learning, (RL) algorithm to refine the at least one hyperparameter of the autoencoder, wherein a reward function of the RL algorithm is calculated on the basis of the generated evaluation.

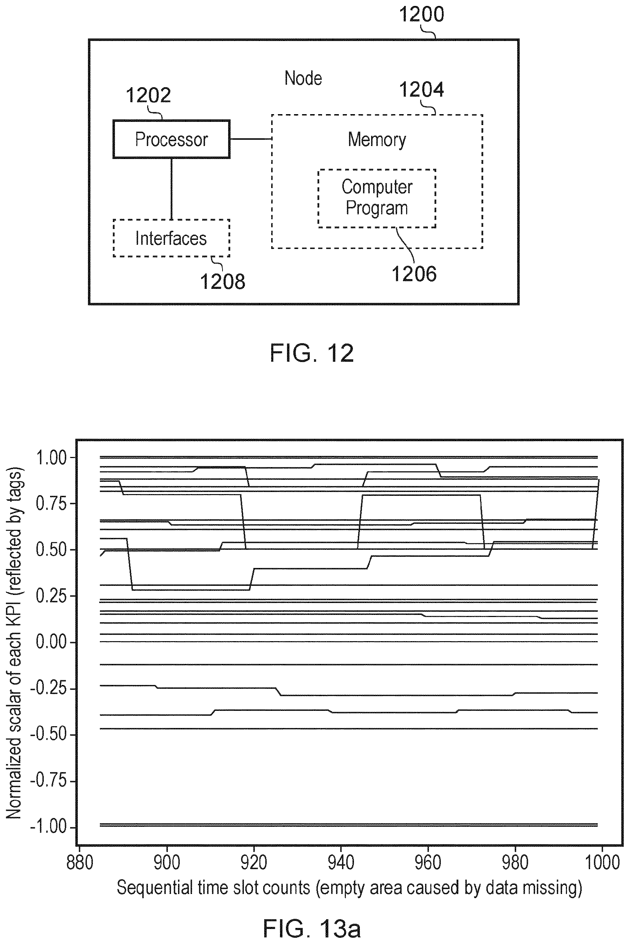

Figure 12 is a block diagram illustrating an example node 1200 which may implement the method 1100 according to examples of the present disclosure, for example on receipt of suitable instructions from a computer program 1206. Referring to Figure 12, the node 1200 comprises a processor or processing circuitry 1202, and may comprise a memory 1204 and interfaces 1208. The processing circuitry 1202 is operable to perform some or all of the steps of the method 1100 as discussed above with reference to Figure 11. The memory 1204 may contain instructions executable by the processing circuitry 1202 such that the node 1200 is operable to perform some or all of the steps of the method 1100. The instructions may also include instructions for executing one or more telecommunications and/or data communications protocols. The instructions may be stored in the form of the computer program 1206. In some examples, the processor or processing circuitry 1002 may include one or more microprocessors or microcontrollers, as well as other digital hardware, which may include digital signal processors (DSPs), special-purpose digital logic, etc. The processor or processing circuitry 1202 may be implemented by any type of integrated circuit, such as an Application Specific Integrated Circuit (ASIC), Field Programmable Gate Array (FPGA) etc. The memory 1204 may include one or several types of memory suitable for the processor, such as read-only memory (ROM), random-access memory, cache memory, flash memory devices, optical storage devices, solid state disk, hard disk drive etc.

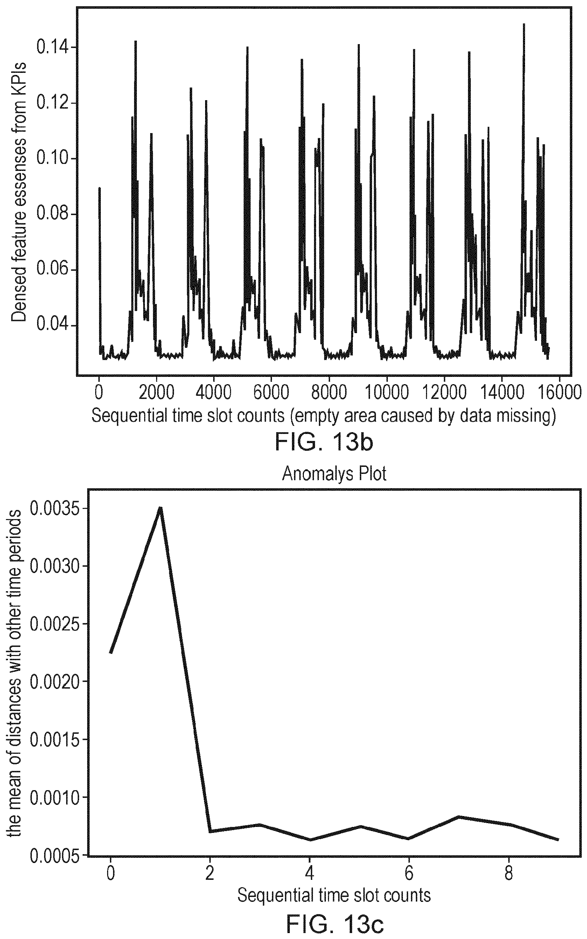

Figures 13a, 13b and 13c illustrate how information is transformed on passage through the intelligence pipeline formed by the connected intelligence execution units implementing methods according to the present disclosure, as illustrated in the example implementation of Figure 10. The intelligence pipeline accepts data from sensors that may be geographically distributed, for example across the smart manufacturing sites of the implementation of Figure 10. The collected data represents information from different production components and their environments. After data processing such that the data is transformed into an appropriate format and normalized, a high dimension data set is obtained, as illustrated in Figure 13a. Feature extraction/data concentration in then performed, resulting in extracted features as illustrated in Figure 13b. After accumulation of features from time windows, distances between the extracted final features are calculated in pairwise, and then average distances for each feature from other features in a given time slot is calculated, as illustrated in Figure 13c. These results may be exposed to external visualizer tools such as Kibana.

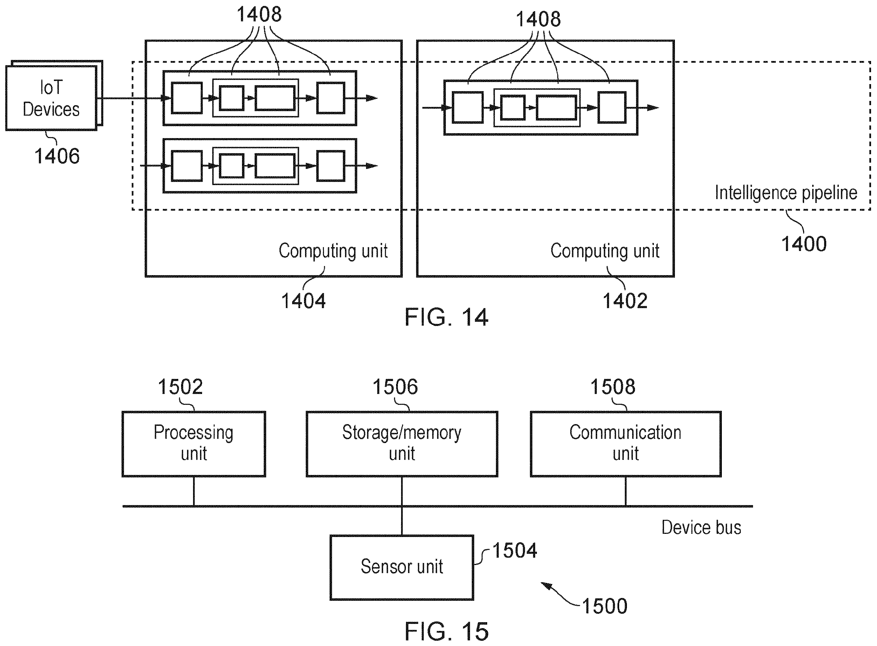

Figure 14 provides a conceptual representation of the intelligence pipeline 1400 formed by one or more computing devices 1402, 1404, on which intelligence execution units 1408 are implementing steps of the methods 100, 200 on data generated by loT devices 1406.

Figure 15 illustrates composition of an example IoT device which may produce data for the data stream. The IoT device 1500 comprises a processing unit 1502, sensor unit 1504, a storage/memory unit 1506 and a communication unit 1508.

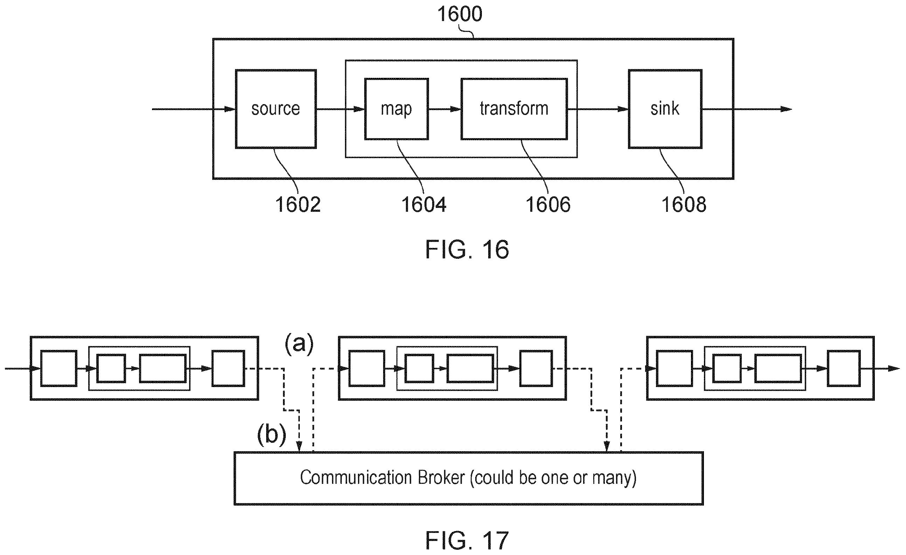

Figure 16 illustrates functional composition of an intelligence execution unit 1600, including data source 1602, map function 1604, transformation function 1606 and data sink 1608.

Figure 17 is a functional representation of the intelligence pipeline, illustrating point-to-point communication between processors and communication using an external broker.

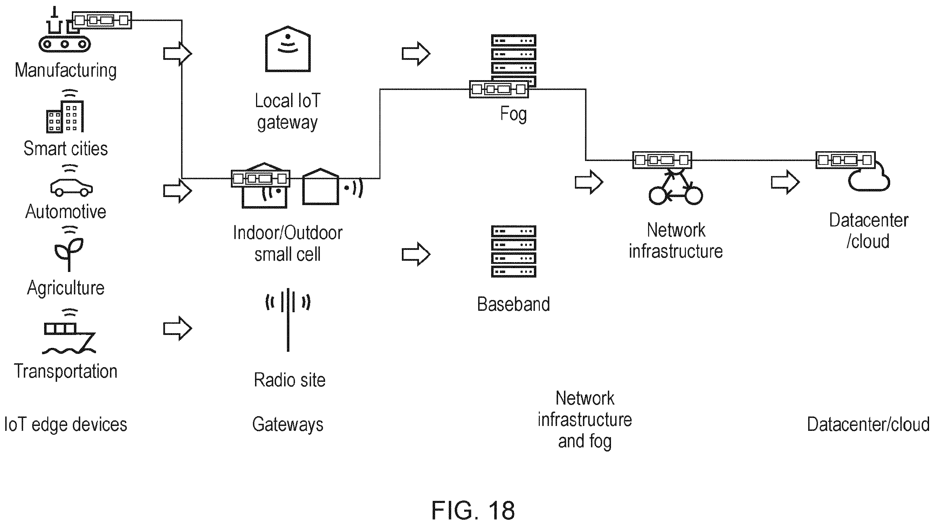

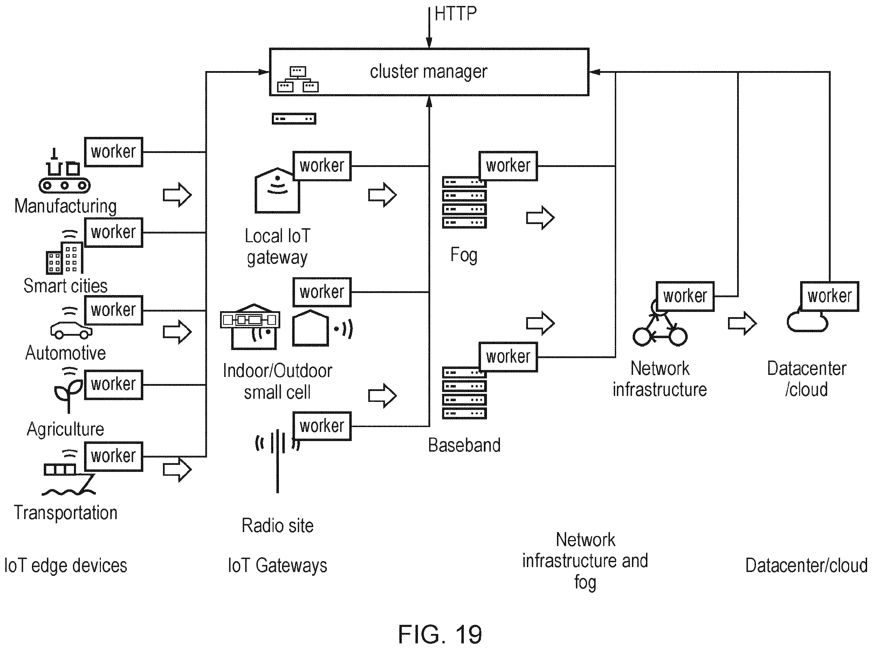

As discussed above, each of the steps in the methods disclosed herein may be implemented in a different location and/or different computing units. Examples of the methods disclosed herein may therefore be implemented within the loT landscape consisting of devices, edge gateways, base stations, network infrastructure, fog nodes, and/or cloud, as illustrated in Figure 18. Figure 19 illustrates one example of how an intelligence pipeline of intelligence execution units implementing methods according to the present disclosure may be orchestrated within the loT landscape.

Examples of the present disclosure provide a technical solution to the challenge of performing event detection in a data streams, which solution is capable of adapting independently to variations in the data stream and to different types, volumes and complexities of data, minimizes the requirement for domain expertise, is fully scalable, reusable and replicable. The proposed solution may be used to provide online anomaly analysis for the data by implementing an automated intelligence data pipeline which accepts raw data and produces actionable intelligence with minimal input from human engineers or domain experts.

Examples of the present disclosure may demonstrate one or more of the following advantages:
- Self-adaptable semi-supervised learning with the enriched capacity to be integrated with data-intensive autonomous systems. Adaptability to the changes through self-revision of models.
- No need for domain expertise for the provision of data labels for creation or training of models; reliance only on easily available "common sense" information for logic verification.
- Provision of online batch-based machine learning for loT data stream in real-time without the limitation of only using stream data models: continuous application of semi-machine learning algorithms on a live data stream to obtain insights using sliding windows and data concentrated both time and feature dimensions.
- Highly scalable solution that is easy to deploy. A cluster can be created by providing an initial configuration file to a root node. The cluster, including the models themselves and underlying computation resource orchestration may then be scaled up/down and out/in according to the number of devices generating data and the quantity and complexity of the data. Machine learning models are refined and updated automatically.
- Highly reusable and replicable solution.

Examples of the present disclosure apply deep learning in semi-supervised methods for retrieving knowledge from raw data, and checking the insights via logical verification. Configuration of models for data concentration is then adjusted by optimizing model hyperparameters using a reinforcement agent, ensuring the methods can adapt to changing environments and widely varying deployment scenarios and use cases.

Example methods proposed herein offer online batch-based machine learning using a stacked deep autoencoder to obtain insights from high-dimensional data. The proposed solutions are dynamically configurable, scalable on both models and system architecture, without dependency on domain expertise, and are therefore highly replicable and reusable in different deployments and use cases.

Example methods proposed herein first apply unsupervised learning (stacked deep autoencoder) to extract and concentrate features from a raw data set. This unsupervised learning does not require any pre-existing labels to train the model. Example methods then apply common knowledge logic verification to exclude detected events having logic conflicts with common sense in the relevant domain, and form a Q table. Based on the Q table, Q learning may be conducted to obtain optimal configurations for the unsupervised learning model (autoencoders) and to then update the existing model. In addition, verified detected events may be used as labels for supervised learning to perform event detection in the concentrated data. Example methods disclosed herein may therefore be used for use cases in which labelled training data is unavailable.

The methods of the present disclosure may be implemented in hardware, or as software modules running on one or more processors. The methods may also be carried out according to the instructions of a computer program, and the present disclosure also provides a computer readable medium having stored thereon a program for carrying out any of the methods described herein. A computer program embodying the disclosure may be stored on a computer readable medium, or it could, for example, be in the form of a signal such as a downloadable data signal provided from an Internet website, or it could be in any other form.

It should be noted that the above-mentioned examples illustrate rather than limit the disclosure, and that those skilled in the art will be able to design many alternative embodiments without departing from the scope of the appended claims. The word "comprising" does not exclude the presence of elements or steps other than those listed in a claim, "a" or "an" does not exclude a plurality, and a single processor or other unit may fulfil the functions of several units recited in the claims. Any reference signs in the claims shall not be construed so as to limit their scope.

## Claims

1. A method for performing event detection on a data stream, the data stream comprising data from a plurality of devices connected by a communications network, the method comprising:
using an autoencoder to concentrate information in the data stream, wherein the autoencoder is configured according to at least one hyperparameter;
detecting an event from the concentrated information;
generating an evaluation of the detected event on the basis of logic verification between the detected event and a knowledge base, wherein the knowledge base comprises at least one of a rule and/or fact associated to at least one of the plurality of devices; and
using a Reinforcement Learning, RL, algorithm to refine the at least one hyperparameter of the autoencoder, wherein a reward function of the RL algorithm is calculated on the basis of the generated evaluation.

2. A method as claimed in claim 1, wherein using an autoencoder to concentrate information in the data stream, wherein the autoencoder is configured according to at least one hyperparameter, comprises using an Unsupervised Learning, UL algorithm to determine a number of layers in the autoencoder and a number of neurons in each layer of the autoencoder on the basis of at least one of:
a parameter associated with the data stream; or
the at least one hyperparameter.

3. A method as claimed in claim 2, wherein the parameter associated with the data stream comprises at least one of:
a data transmission frequency associated with the data stream; and/or
a dimensionality associated with the data stream.

4. A method as claimed in any one of the preceding claims, wherein the at least one hyperparameter comprises:
a time interval associated with a window;
a scaling factor;
a layer number decreasing rate.

5. A method as claimed in any one of the preceding claims, wherein the autoencoder comprises a distributed, stacked autoencoder, and wherein using the distributed stacked autoencoder comprises:
dividing the data stream into one or more sub-streams of data;
using a different autoencoder of the distributed stacked autoencoder to concentrate the information in each respective sub-stream; and
providing the concentrated sub-streams to another autoencoder in another level of a hierarchy of the stacked autoencoder.

6. A method as claimed in any one of the preceding claims, further comprising:
accumulating data in the data stream; and
dividing the accumulated data stream into a plurality of consecutive windows, each window corresponding to a different time interval;
and wherein using the autoencoder comprises concentrating the information in the windowed data.

7. A method as in any one of the preceding claims, wherein detecting an event from the concentrated information comprises:
accumulating the concentrated information over time; and
comparing different portions of the accumulated concentrated data.

8. A method as claimed in claim 7, wherein detecting an event from the concentrated information further comprises:
using at least one event detected by comparing different portions of the accumulated concentrated data to generate a label for a training data set comprising condensed information from the data stream;
using the training data set to train a Supervised Learning, SL, model; and
using the SL model to detect an event from the concentrated information.

9. A method as claimed in any one of the preceding claims, wherein generating an evaluation of the detected event on the basis of logic verification between the detected event and a knowledge base comprises:
converting parameter values corresponding to the detected event into a logical assertion; and
evaluating the compatibility of the assertion with the contents of the knowledge base, wherein the contents of the knowledge base comprises at least one of a rule and/or a fact.

10. A method as claimed in any one of the preceding claims, wherein the at least one rule and/or fact is generated from at least one of:
an operating environment of at least some of the plurality of devices;
an operating domain of at least some of the plurality of devices;
a service agreement applying to at least some of the plurality of devices;
a deployment specification applying to at least some of the plurality of devices.

11. A method as claimed in claim 9 or 10, wherein generating an evaluation of the detected event on the basis of logic verification between the detected event and a knowledge base further comprises performing at least one of incrementing or decrementing an evaluation score for each logical conflict between the assertion and a fact or rule in the knowledge base.

12. A method as claimed in any one of the preceding claims, further comprising updating the knowledge base to include a detected event that is logically compatible with the knowledge base.

13. A method as claimed in any one of the preceding claims, wherein generating an evaluation of the detected event further comprises generating the evaluation on the basis of logic verification between the detected event and a knowledge base and on the basis of an error value generated during at least one of concentration of information in the data stream or detection of an event from the concentrated information.

14. A method as claimed in any one of the preceding claims, wherein using a Reinforcement Learning, RL, algorithm to refine the at least one hyperparameter of the autoencoder, wherein a reward function of the RL algorithm is calculated on the basis of the generated evaluation, comprises:
using the RL algorithm to trial different values of the at least one hyperparameter and to determine a value of the at least one hyperparameter that is associated with a maximum value of the reward function.

15. A method as claimed in any one of the preceding claims, wherein using a Reinforcement Learning, RL, algorithm to refine the at least one hyperparameter of the autoencoder, wherein a reward function of the RL algorithm is calculated on the basis of the generated evaluation, comprises:
establishing a State of the autoencoder, wherein the State of the autoencoder is represented by the value of the at least one hyperparameter;
selecting an Action to be performed on the autoencoder as a function of the established state;
causing the selected Action to be performed on the autoencoder; and
calculating a value of a reward function following performance of the selected Action;
wherein selecting an Action to be performed on the autoencoder as a function of the established state comprises selecting an Action from a set of Actions comprising incrementation and decrementation of the value of the at least one hyperparameter.

16. A system for performing event detection on a data stream, the data stream comprising data from a plurality of devices connected by a communications network, the system configured to:
use an autoencoder to concentrate information in the data stream, wherein the autoencoder is configured according to at least one hyperparameter;
detect an event from the concentrated information;
generate an evaluation of the detected event on the basis of logic verification between the detected event and a knowledge base, wherein the knowledge base comprises at least one of a rule and/or fact associated to at least one of the plurality of devices; and
use a Reinforcement Learning, RL, algorithm to refine the at least one hyperparameter of the autoencoder, wherein a reward function of the RL algorithm is calculated on the basis of the generated evaluation.

17. A system as claimed in claim 16, wherein the system comprises:
a data processing function configured to use the autoencoder to concentrate information in the data stream, wherein the autoencoder is configured according to at least one hyperparameter;
an event detection function configured to detect the event from the concentrated information;
an evaluation function configured to generate the evaluation of the detected event on the basis of logical compatibility between the detected event and the knowledge base; and
a learning function configured to use the Reinforcement Learning, RL, algorithm to refine the at least one hyperparameter of the autoencoder, wherein the reward function of the RL algorithm is calculated on the basis of the generated evaluation,
wherein at least one of the functions is further configured as a virtualised function carried out by at least one virtual node.

18. A system as claimed in claim 17, wherein the evaluation function is configured to generate an evaluation of the detected event on the basis of logical compatibility between the detected event and a knowledge base by:
converting parameter values corresponding to the detected event into a logical assertion; and
evaluating the compatibility of the assertion with the contents of the knowledge base, wherein the contents of the knowledge base comprises at least one of a rule and/or a fact.

19. A system as claimed in claim 18, wherein the evaluation function is further configured to generate an evaluation of the detected event on the basis of logical compatibility between the detected event and a knowledge base by performing at least one of incrementing or decrementing an evaluation score for each logical conflict between the assertion and a fact or rule in the knowledge base.

## Patentansprüche

1. Verfahren zur Durchführung von Ereigniserkennung an einem Datenstrom, wobei der Datenstrom Daten aus einer Mehrzahl von Vorrichtungen umfasst, die durch ein Kommunikationsnetzwerk verbunden sind, wobei das Verfahren Folgendes umfasst:
Verwenden eines Autoencoders, um Informationen in dem Datenstrom zu konzentrieren, wobei der Autoencoder gemäß mindestens einem Hyperparameter konfiguriert ist;
Erkennen eines Ereignisses aus den konzentrierten Informationen;
Erzeugen einer Bewertung des erkannten Ereignisses basierend auf einer logischen Verifizierung zwischen einem erkannten Ereignis und einer Wissensbasis, wobei die Wissensbasis mindestens eines von einer Regel und/oder einem Fakt umfasst, die/der mit mindestens einer der Mehrzahl von Vorrichtungen assoziiert ist; und
Verwenden eines Algorithmus für verstärkendes Lernen, RL, um den mindestens einen Hyperparameter des Autoencoders zu verfeinern, wobei eine Belohnungsfunktion des RL-Algorithmus basierend auf der erzeugten Bewertung berechnet wird.

2. Verfahren nach Anspruch 1, wobei das Verwenden eines Autoencoders, um Informationen in dem Datenstrom zu konzentrieren, wobei der Autoencoder gemäß mindestens einem Hyperparameter konfiguriert ist, Verwenden eines Algorithmus für unüberwachtes Lernen, UL, umfasst, um eine Anzahl von Schichten in dem Autoencoder und eine Anzahl von Neuronen in jeder Schicht des Autoencoders basierend auf einem mindestens einem von Folgendem zu bestimmen:
einem Parameter, der mit dem Datenstrom assoziiert ist; oder
dem mindestens einen Hyperparameter.

3. Verfahren nach Anspruch 2, wobei der mit dem Datenstrom assoziierte Parameter mindestens eines von Folgendem umfasst:
eine Datenübertragungsfrequenz, die mit dem Datenstrom assoziiert ist; und/oder
eine Dimensionalität, die mit dem Datenstrom assoziiert ist.

4. Verfahren nach einem der vorhergehenden Ansprüche, wobei der mindestens eine Hyperparameter Folgendes umfasst:
ein Zeitintervall, das mit einem Fenster assoziiert ist;
einen Skalierungsfaktor;
eine Rate zur Verringerung der Schichtanzahl.

5. Verfahren nach einem der vorhergehenden Ansprüche, wobei der Autoencoder einen verteilten gestapelten Autoencoder umfasst und wobei das Verwenden des verteilten gestapelten Autoencoders Folgendes umfasst:
Teilen des Datenstroms in einen oder mehreren Teilströme von Daten;
Verwenden eines verschiedenen Autoencoders des verteilten gestapelten Autoencoders, um die Informationen in jedem jeweiligen Teilstrom zu konzentrieren; und
Bereitstellen der konzentrierten Teilströme an einen anderen Autoencoder auf einer anderen Ebene einer Hierarchie des gestapelten Autoencoders.

6. Verfahren nach einem der vorhergehenden Ansprüche, ferner umfassend:
Akkumulieren von Daten in dem Datenstrom; und
Teilen des akkumulierten Datenstroms in eine Mehrzahl von aufeinanderfolgenden Fenstern, wobei jedes Fenster einem anderen Zeitintervall entspricht;
und wobei das Verwenden des Autoencoders Konzentrieren der Informationen in den Fensterdaten umfasst.

7. Verfahren nach einem der vorhergehenden Ansprüche, wobei das Erkennen eines Ereignisses aus den konzentrierten Informationen Folgendes umfasst:
Akkumulieren der konzentrierten Informationen im Laufe der Zeit; und
Vergleichen verschiedener Abschnitte der akkumulierten konzentrierten Daten.

8. Verfahren nach Anspruch 7, wobei das Erkennen eines Ereignisses aus den konzentrierten Informationen ferner Folgendes umfasst:
Verwenden mindestens eines Ereignisses, das durch Vergleichen verschiedener Abschnitte der akkumulierten konzentrierten Daten erkannt wird, um eine Kennzeichnung eines Trainingsdatensatzes zu erzeugen, der komprimierte Informationen aus dem Datenstrom umfasst;
Verwenden des Trainingsdatensatzes zum Trainieren eines Modells für überwachtes Lernen, SL; und
Verwenden des SL-Modells, um ein Ereignis aus den konzentrierten Informationen zu erkennen.

9. Verfahren nach einem der vorhergehenden Ansprüche, wobei das Erzeugen einer Bewertung des erkannten Ereignisses basierend auf einer logischen Verifizierung zwischen dem erkannten Ereignis und einer Wissensbasis Folgendes umfasst:
Umwandeln von Parameterwerten, die dem erkannten Ereignis entsprechen, in eine logische Aussage; und
Bewerten der Kompatibilität der Aussage mit Inhalten der Wissensbasis, wobei die Inhalte der Wissensbasis mindestens eines von einer Regel und/oder einem Fakt umfassen.

10. Verfahren nach einem der vorhergehenden Ansprüche, wobei die mindestens eine Regel und/oder der mindestens eine Fakt aus mindestens einem von Folgendem erzeugt wird:
einer Betriebsumgebung mindestens einiger der Mehrzahl von Vorrichtungen;
einer Betriebsdomäne mindestens einiger der Mehrzahl von Vorrichtungen;
einer Dienstvereinbarung, die für mindestens einige der Mehrzahl von Vorrichtungen gilt;
einer Bereitstellungsspezifikation, die für mindestens einige der Mehrzahl von Vorrichtungen gilt.

11. Verfahren nach Anspruch 9 oder 10, wobei das Erzeugen einer Bewertung des erkannten Ereignisses basierend auf einer logischen Verifizierung zwischen dem erkannten Ereignis und einer Wissensbasis ferner Durchführen mindestens eines von Inkrementieren oder Dekrementieren eines Bewertungsscores für jeden logischen Konflikt zwischen der Aussage und einem Fakt oder einer Regel in der Wissensbasis umfasst.

12. Verfahren nach einem der vorhergehenden Ansprüche, ferner umfassend Aktualisieren der Wissensbasis, um ein erkanntes Ergebnis einzubeziehen, das logisch mit der Wissensbasis kompatibel ist.

13. Verfahren nach einem der vorhergehenden Ansprüche, wobei das Erzeugen einer Bewertung des erkannten Ereignisses ferner Erzeugen der Bewertung basierend auf einer logischen Verifizierung zwischen dem erkannten Ereignis und einer Wissensbasis und basierend auf einem Fehlerwert umfasst, der während mindestens einer von einer Konzentration von Informationen in dem Datenstrom oder einer Erkennung eines Ereignisses aus den konzentrierten Informationen erzeugt wird.

14. Verfahren nach einem der vorhergehenden Ansprüche, wobei das Verwenden eines Algorithmus für verstärkendes Lernen, RL, um den mindestens einen Hyperparameter des Autoencoders zu verfeinern, wobei eine Belohnungsfunktion des RL-Algorithmus basierend auf der erzeugten Bewertung berechnet wird, Folgendes umfasst:
Verwenden des RL-Algorithmus, um verschiedene Werte des mindestens einen Hyperparameters auszuprobieren und einen Wert des mindestens einen Hyperparameters zu bestimmen, der mit einem Maximalwert der Belohnungsfunktion assoziiert ist.

15. Verfahren nach einem der vorhergehenden Ansprüche, wobei das Verwenden eines Algorithmus für verstärkendes Lernen, RL, um den mindestens einen Hyperparameter des Autoencoders zu verfeinern, wobei eine Belohnungsfunktion des RL-Algorithmus basierend auf der erzeugten Bewertung berechnet wird, Folgendes umfasst:
Festlegen eines Zustands des Autoencoders, wobei der Zustand des Autoencoders durch den Wert des mindestens einen Hyperparameters dargestellt wird;
Auswählen einer Aktion, die an dem Autoencoder ausgeführt werden soll, in Abhängigkeit von dem festgelegten Zustand;
Veranlassen der Ausführung der ausgewählten Aktion an dem Autoencoder; und
Berechnen eines Werts einer Belohnungsfunktion nach Ausführung der ausgewählten Aktion;
wobei das Auswählen einer Aktion, die an dem Autoencoder ausgeführt werden soll, in Abhängigkeit von dem festgelegten Zustand Auswählen einer Aktion aus einem Satz von Aktionen umfasst, der Inkrementierung und Dekrementierung des Werts des mindestens einen Hyperparameters umfasst.

16. System zum Durchführen von Ereigniserkennung an einem Datenstrom, wobei der Datenstrom Daten aus einer Mehrzahl von Vorrichtungen umfasst, die durch ein Kommunikationsnetzwerk verbunden sind, wobei das System zu Folgendem konfiguriert ist:
Verwenden eines Autoencoders, um Informationen in dem Datenstrom zu konzentrieren, wobei der Autoencoder gemäß mindestens einem Hyperparameter konfiguriert ist;
Erkennen eines Ereignisses aus den konzentrierten Informationen;
Erzeugen einer Bewertung des erkannten Ereignisses basierend auf einer logischen Verifizierung zwischen einem erkannten Ereignis und einer Wissensbasis, wobei die Wissensbasis mindestens eines von einer Regel und/oder einem Fakt umfasst, die/der mit mindestens einer der Mehrzahl von Vorrichtungen assoziiert ist; und
Verwenden eines Algorithmus für verstärkendes Lernen, RL, um den mindestens einen Hyperparameter des Autoencoders zu verfeinern, wobei eine Belohnungsfunktion des RL-Algorithmus basierend auf der erzeugten Bewertung berechnet wird.

17. System nach Anspruch 16, wobei das System Folgendes umfasst:
eine Datenverarbeitungsfunktion, die dazu konfiguriert ist, einen Autoencoder zu verwenden, um Informationen in dem Datenstrom zu konzentrieren, wobei der Autoencoder gemäß mindestens einem Hyperparameter konfiguriert ist;
eine Ereigniserkennungsfunktion, die dazu konfiguriert ist, das Ereignis aus den konzentrierten Informationen zu erkennen;
eine Bewertungsfunktion, die dazu konfiguriert ist, die Bewertung des erkannten Ereignisses basierend auf einer logischen Kompatibilität zwischen dem erkannten Ereignis und der Wissensbasis zu erzeugen; und
eine Lernfunktion, die dazu konfiguriert ist, den Algorithmus für verstärkendes Lernen, RL, zu verwenden, um den mindestens einen Hyperparameter des Autoencoders zu verfeinern, wobei eine Belohnungsfunktion des RL-Algorithmus basierend auf der erzeugten Bewertung berechnet wird,
wobei mindestens eine der Funktionen ferner als eine virtualisierte Funktion konfiguriert ist, die von mindestens einem virtuellen Knoten ausgeführt wird.

18. System nach Anspruch 17, wobei die Bewertungsfunktion dazu konfiguriert ist, eine Bewertung des erkannten Ereignisses basierend auf einer logischen Verifizierung zwischen dem erkannten Ereignis und einer Wissensbasis durch Folgendes zu erzeugen:
Umwandeln von Parameterwerten, die dem erkannten Ereignis entsprechen, in eine logische Aussage; und
Bewerten der Kompatibilität der Aussage mit Inhalten der Wissensbasis, wobei die Inhalte der Wissensbasis mindestens eines von einer Regel und/oder einem Fakt umfassen.

19. System nach Anspruch 18, wobei die Bewertungsfunktion ferner dazu konfiguriert ist, eine Bewertung des erkannten Ereignisses basierend auf einer logischen Kompatibilität zwischen dem erkannten Ereignis und einer Wissensbasis durch Durchführen mindestens eines von Inkrementieren oder Dekrementieren eines Bewertungsscores für jeden logischen Konflikt zwischen der Aussage und einem Fakt oder einer Regel in der Wissensbasis zu erzeugen.

## Revendications

1. Procédé de réalisation d'une détection d'événement dans un flux de données, le flux de données comprenant des données provenant d'une pluralité de dispositifs connectés par un réseau de communication, le procédé comprenant :
l'utilisation d'un auto-encodeur pour concentrer des informations dans le flux de données, dans lequel l'auto-encodeur est configuré selon au moins un hyperparamètre ;
la détection d'un événement à partir des informations concentrées ;
la génération d'une évaluation de l'événement détecté sur la base d'une vérification logique entre l'événement détecté et une base de connaissances, dans lequel la base de connaissances comprend au moins l'un parmi une règle et/ou un fait associé à au moins l'un de la pluralité de dispositifs ; et
l'utilisation d'un algorithme d'apprentissage par renforcement, RL, pour affiner l'au moins un hyperparamètre de l'auto-encodeur, dans lequel une fonction de récompense de l'algorithme RL est calculée sur la base de l'évaluation générée.

2. Procédé selon la revendication 1, dans lequel l'utilisation d'un auto-encodeur pour concentrer des informations dans le flux de données, l'auto-encodeur étant configuré selon au moins un hyperparamètre, comprend l'utilisation d'un algorithme d'apprentissage non supervisé, UL, pour déterminer un nombre de couches dans l'auto-encodeur et un nombre de neurones dans chaque couche de l'auto-encodeur sur la base d'au moins l'un parmi :
un paramètre associé au flux de données ; ou
l'au moins un hyperparamètre.

3. Procédé selon la revendication 2, dans lequel le paramètre associé au flux de données comprend au moins l'une parmi :
une fréquence de transmission de données associée au flux de données ; et/ou
un dimensionnalité associée au flux de données.

4. Procédé selon l'une quelconque des revendications précédentes, dans lequel l'au moins un hyperparamètre comprend :
un intervalle de temps associé à une fenêtre ;
un facteur d'échelle ;
un taux de réduction de nombre de couches.

5. Procédé selon l'une quelconque des revendications précédentes, dans lequel l'auto-encodeur comprend un auto-encodeur empilé distribué, et dans lequel l'utilisation de l'auto-encodeur empilé distribué comprend :
la division du flux de données en un ou plusieurs sous-flux de données ;
l'utilisation d'un auto-encodeur différent de l'auto-encodeur empilé distribué pour concentrer les informations dans chaque sous-flux respectif ; et
la fourniture des sous-flux concentrés à un autre auto-encodeur à un autre niveau d'une hiérarchie de l'auto-encodeur empilé.

6. Procédé selon l'une quelconque des revendications précédentes, comprenant en outre :
le cumul de données dans le flux de données ; et
la division du flux de données cumulé en une pluralité de fenêtres consécutives, chaque fenêtre correspondant à un intervalle de temps différent ;
et dans lequel l'utilisation de l'auto-encodeur comprend la concentration des informations dans les données mises en fenêtre.

7. Procédé selon l'une quelconque des revendications précédentes, dans lequel la détection d'un événement à partir des informations concentrées comprend :
le cumul des informations concentrées au fil du temps ; et
la comparaison de différentes parties des données concentrées cumulées.

8. Procédé selon la revendication 7, dans lequel la détection d'un événement à partir des informations concentrées comprend en outre :
l'utilisation d'au moins un événement détecté par la comparaison de différentes parties des données concentrées cumulées pour générer une étiquette pour un jeu de données d'entraînement comprenant des informations condensées à partir du flux de données ;
l'utilisation du jeu de données d'entraînement pour entraîner un modèle d'apprentissage supervisé, SL ; et
l'utilisation du modèle SL pour détecter un événement à partir des informations concentrées.

9. Procédé selon l'une quelconque des revendications précédentes, dans lequel la génération d'une évaluation de l'événement détecté sur la base d'une vérification logique entre l'événement détecté et une base de connaissances comprend :
la conversion de valeurs de paramètres correspondant à l'événement détecté en une assertion logique ; et
l'évaluation de la compatibilité de l'assertion avec le contenu de la base de connaissances, dans lequel le contenu de la base de connaissances comprend au moins l'un parmi une règle et/ou un fait.

10. Procédé selon l'une quelconque des revendications précédentes, dans lequel l'au moins un parmi une règle et/ou un fait est généré à partir d'au moins l'un parmi :
un environnement de fonctionnement d'au moins certains de la pluralité de dispositifs ;
un domaine de fonctionnement d'au moins certains de la pluralité de dispositifs ;
un accord de service s'appliquant à au moins certains de la pluralité de dispositifs ;
une spécification de déploiement s'appliquant à au moins certains de la pluralité de dispositifs.

11. Procédé selon la revendication 9 ou 10, dans lequel la génération d'une évaluation de l'événement détecté sur la base d'une vérification logique entre l'événement détecté et une base de connaissances comprend en outre la réalisation d'au moins l'une parmi une incrémentation ou une décrémentation d'un score d'évaluation pour chaque conflit logique entre l'assertion et un fait ou une règle dans la base de connaissances.

12. Procédé selon l'une quelconque des revendications précédentes, comprenant en outre la mise à jour de la base de connaissances pour inclure un événement détecté qui est compatible logiquement avec la base de connaissances.

13. Procédé selon l'une quelconque des revendications précédentes, dans lequel la génération d'une évaluation de l'événement détecté comprend en outre la génération de l'évaluation sur la base d'une vérification logique entre l'événement détecté et une base de connaissances et sur la base d'une valeur d'erreur générée au cours d'au moins l'une parmi une concentration d'informations dans le flux de données ou une détection d'un événement à partir des informations concentrées.

14. Procédé selon l'une quelconque des revendications précédentes, dans lequel l'utilisation d'un algorithme d'apprentissage par renforcement, RL, pour affiner l'au moins un hyperparamètre de l'auto-encodeur, une fonction de récompense de l'algorithme RL étant calculée sur la base de l'évaluation générée, comprend :
l'utilisation de l'algorithme RL pour essayer différentes valeurs de l'au moins un hyperparamètre et pour déterminer une valeur de l'au moins un hyperparamètre qui est associée à une valeur maximale de la fonction de récompense.

15. Procédé selon l'une quelconque des revendications précédentes, dans lequel l'utilisation d'un algorithme d'apprentissage par renforcement, RL, pour affiner l'au moins un hyperparamètre de l'auto-encodeur, une fonction de récompense de l'algorithme RL étant calculée sur la base de l'évaluation générée, comprend :
l'établissement d'un état de l'auto-encodeur, dans lequel l'état de l'auto-encodeur est représenté par la valeur de l'au moins un hyperparamètre ;
la sélection d'une action à réaliser sur l'auto-encodeur en fonction de l'état établi ;
l'acte d'amener l'action sélectionnée à être réalisée sur l'auto-encodeur ; et
le calcul d'une valeur d'une fonction de récompense à la suite d'une réalisation de l'action sélectionnée ;
dans lequel la sélection d'une action à réaliser sur l'auto-encodeur en fonction de l'état établi comprend la sélection d'une action parmi un ensemble d'actions comprenant une incrémentation et une décrémentation de la valeur de l'au moins un hyperparamètre.

16. Système de réalisation d'une détection d'événement dans un flux de données, le flux de données comprenant des données provenant d'une pluralité de dispositifs connectés par un réseau de communication, le système étant configuré pour :
utiliser un auto-encodeur pour concentrer des informations dans le flux de données, dans lequel l'auto-encodeur est configuré selon au moins un hyperparamètre ;
détecter un événement à partir des informations concentrées ;
générer une évaluation de l'événement détecté sur la base d'une vérification logique entre l'événement détecté et une base de connaissances, dans lequel la base de connaissances comprend au moins l'un parmi une règle et/ou un fait associé à au moins l'un de la pluralité de dispositifs ; et
utiliser un algorithme d'apprentissage par renforcement, RL, pour affiner l'au moins un hyperparamètre de l'auto-encodeur, dans lequel une fonction de récompense de l'algorithme RL est calculée sur la base de l'évaluation générée.

17. Système selon la revendication 16, dans lequel le système comprend :
une fonction de traitement de données configurée pour utiliser l'auto-encodeur pour concentrer des informations dans le flux de données, dans lequel l'auto-encodeur est configuré selon au moins un hyperparamètre ;
une fonction de détection d'événement configurée pour détecter l'événement à partir des informations concentrées ;
une fonction d'évaluation configurée pour générer l'évaluation de l'événement détecté sur la base d'une compatibilité logique entre l'événement détecté et la base de connaissances ; et
une fonction d'apprentissage configurée pour utiliser l'algorithme d'apprentissage par renforcement, RL, pour affiner l'au moins un hyperparamètre de l'auto-encodeur, dans lequel la fonction de récompense de l'algorithme RL est calculée sur la base de l'évaluation générée,
dans lequel au moins l'une des fonctions est en outre configurée sous forme d'une fonction virtualisée réalisée par au moins un nœud virtuel.

18. Système selon la revendication 17, dans lequel la fonction d'évaluation est configurée pour générer une évaluation de l'événement détecté sur la base d'une compatibilité logique entre l'événement détecté et une base de connaissances par :
la conversion de valeurs de paramètres correspondant à l'événement détecté en une assertion logique ; et
l'évaluation de la compatibilité de l'assertion avec le contenu de la base de connaissances, dans lequel le contenu de la base de connaissances comprend au moins l'un parmi une règle et/ou un fait.

19. Système selon la revendication 18, dans lequel la fonction d'évaluation est en outre configurée pour générer une évaluation de l'événement détecté sur la base d'une compatibilité logique entre l'événement détecté et une base de connaissances par la réalisation d'au moins l'une parmi une incrémentation ou une décrémentation d'un score d'évaluation pour chaque conflit logique entre l'assertion et un fait ou une règle dans la base de connaissances.
